# EUROPEAN PATENT SPECIFICATION

(11) **EP 3 963 802 B1**
(45) Date of publication and mention of the grant of the patent: **11.11.2026**
(21) Application number: 20724961.6
(22) Date of filing: 04.05.2020
(51) Int. Cl.: H04L 5/00

(54) **LAYER 1 (L1) SIGNALING FOR FAST SECONDARY CELL (SCELL) MANAGEMENT**
SCHICHT-1(L1)-SIGNALISIERUNG FÜR DAS MANAGEMENT VON SCHNELLEN SEKUNDÄRZELLEN (SCELL)
SIGNALISATION DE COUCHE 1 (L1) PERMETTANT UNE GESTION RAPIDE DE CELLULES SECONDAIRES (SCELL)

(30) Priority: 02.05.2019 US 201962842169 P
(43) Date of publication of application: 09.03.2022
(73) Proprietor: TELEFONAKTIEBOLAGET LM ERICSSON (PUBL), 164 83 Stockholm (SE)
(72) Inventor: NORY, Ravikiran, San José, California 95134 (US); NIMBALKER, Ajit, Fremont, California 94538 (US)
(74) Representative: Ericsson
(86) International application number: PCT/SE2020/050447
(87) International publication number: WO 2020/222699

(56) References cited:
- EP-A1- 3 595 199
- EP-A1- 3 595 199
- KR-A- 20180 116 157
- KR-A- 20180 116 157
- KR-A- 20190 037 049
- KR-A- 20190 037 049
- US-A1- 2019 124 558
- US-A1- 2019 124 558

## Description

### TECHNICAL FIELD

Wireless communication and in particular, Open Systems Interconnect (OSI) Layer 1 (L1) signaling for fast secondary cell (Scell) management (e.g., as compared to existing arrangements).

### BACKGROUND

### Carrier Aggregation

Carrier Aggregation is generally used in the 3^{rd} Generation Partnership Project (3GPP) New Radio (NR) (also known as "SG") and Long-Term Evolution (LTE) systems to improve wireless device (WD) (e.g., user equipment (UE)) transmit and receive data rates. With carrier aggregation (CA), the WD typically operates initially on a single serving cell called a primary cell (Pcell). The Pcell is operated on a component carrier in a frequency band. The WD is then configured by the network (e.g., network node) with one or more secondary serving cells (Scell(s)). Each Scell can correspond to a component carrier (CC) in the same frequency band (intra-band CA) or different frequency band (inter-band CA) from the frequency band of the CC corresponding to the Pcell. For the WD to transmit/receive data on the Scell(s) (e.g., by receiving downlink shared channel (DL-SCH) information on a physical downlink shared channel (PDSCH) or by transmitting uplink shared channel (UL-SCH) information on a physical uplink shared channel (PUSCH)), the Scell(s) should be activated by the network, e.g., the network node. The Scell(s) can also be deactivated and later reactivated as needed via activation/deactivation signaling.

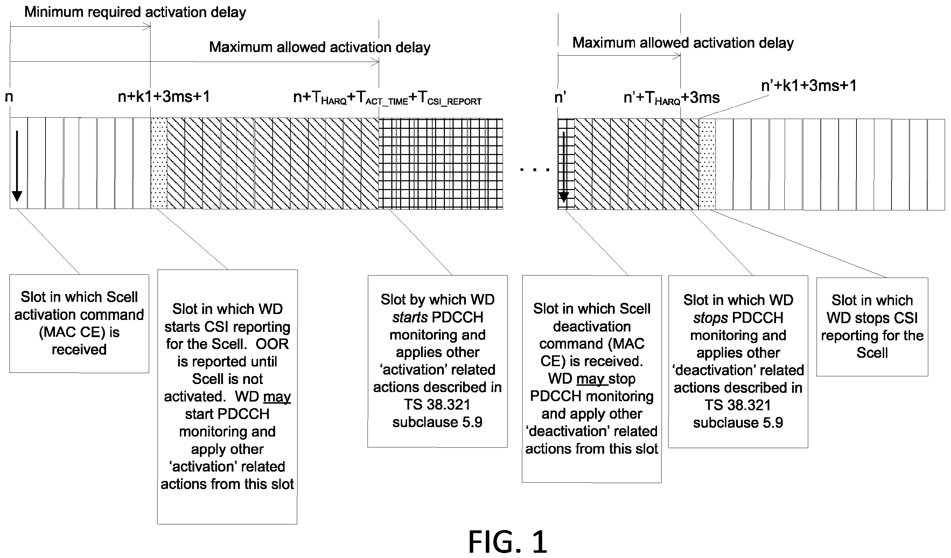

FIG. 1 illustrates an example of Scell activation/deactivation related procedures specified for 3GPP Release 15 (Rel-15) New Radio (NR) (also known as "5G" or 5^{th} Generation). As shown in FIG. 1, except for channel state information (CSI) reporting, the WD is allowed to start performing other 'activation related actions' (e.g., physical downlink control channel (PDCCH) monitoring for Scell, physical uplink control channel (PUCCH)/sounding reference signal (SRS) transmission on the Scell) within a specified range of slots, e.g., after the minimum required activation delay (such as the delay specified in 3GPP Technical Specification (TS) 38.213) and before the maximum allowed activation delay (such as the delay specified in TS 38.133). CSI reporting for the Scell starts (and stops) with a fixed slot offset after receiving the activation (deactivation) command.

Minimum required activation delay and maximum allowed activation delay for some example conditions are shown herein below.
- Minimum required activation delay is k1+3ms+1 slots as specified TS 38.213 sub clause 4.3. Assuming 30kHz numerology for Pcell, and k1=4, this would be 5.5 milliseconds (ms).
- Maximum allowed activation delay may depend on conditions such as those described in TS 38.133 sub clause 8.3.2 and the value varies based on WD measurement configuration, operating frequency range and other aspects.
   ∘ Assuming T_HARQ in TS 38.133 has similar meaning as k1 in TS 38.213, and assuming 'known Scell' with Scell measurement cycle is equal to or smaller than [160ms], and T_csi_reporting=4 slots
      ▪ For FR1 and 30 kHz subcarrier spacing (SCS),
         - If SMTC (synchronization signal/physical broadcast channel block measurement time configuration) periodicity 5ms, the delay cannot be larger than (T_HARQ= 4slots) + (T_act_time = 5ms+5ms) + (T_csi_report = 4slots) = 14ms;
         - If SMTC periodicity 20ms, the delay cannot be larger than (T_HARQ= 4slots) + (T_act_time = 5ms+20ms) + (T_csi_report = 4slots) = 29ms.
      ▪ For FR2, assuming this is the first Scell being activated in that FR2 band,
         - SMTC periodicity 5ms, the delay is 4slots+5ms+TBD*5ms+4slots= 6ms+X*5ms;
         - SMTC periodicity 20ms, the delay is 4slots+5ms+TBD*20ms+4slots = 6ms+X*20ms
         - X>1 is TBD in current Rel-15 specs.

For other conditions, e.g. Scell is not 'known' and longer SMTC periodicities, the maximum allowed activation delay is much longer than the values in the above example.

However, the existing arrangements are inefficient.

US 2019/0124558 A1 relates to secondary cell activation and deactivation enhancements and discloses a combined approach of MAC CE signaling and bandwidth part (BWP) DCI for reducing latency and enabling UE power saving.

EP 3 595 199 A1 relates to a method for performing initial access in a wireless communication system and discusses Carrier Aggregation (CA) and BWP configuration.

### SUMMARY

The present invention is set out in the independent claims whereas preferred embodiments and further implementations are outlined in the dependent claims, description and figures.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 illustrates an example of Scell activation/deactivation in 3GPP NR Rel-15;
FIG. 2 is a schematic diagram of an exemplary network architecture illustrating a communication system connected via an intermediate network to a host computer according to the principles in the present disclosure;
FIG. 3 is a block diagram of a host computer communicating via a network node with a wireless device over an at least partially wireless connection according to some embodiments of the present disclosure;
FIG. 4 is a flowchart illustrating exemplary methods implemented in a communication system including a host computer, a network node and a wireless device for executing a client application at a wireless device according to some embodiments of the present disclosure;
FIG. 5 is a flowchart illustrating exemplary methods implemented in a communication system including a host computer, a network node and a wireless device for receiving user data at a wireless device according to some embodiments of the present disclosure;
FIG. 6 is a flowchart illustrating exemplary methods implemented in a communication system including a host computer, a network node and a wireless device for receiving user data from the wireless device at a host computer according to some embodiments of the present disclosure;
FIG. 7 is a flowchart illustrating exemplary methods implemented in a communication system including a host computer, a network node and a wireless device for receiving user data at a host computer according to some embodiments of the present disclosure;
FIG. 8 is a flowchart of an exemplary process in a network node for Scell management unit according to the claimed invention;
FIG. 9 is a flowchart of an exemplary process in a wireless device for operational unit according to the claimed invention;
FIG. 10 illustrates an example of a first embodiment of the present disclosure;
FIG. 11 illustrates an example of a second embodiment of the present disclosure; and
FIG. 12 illustrates an example of a third embodiment of the present disclosure.

### DETAILED DESCRIPTION

The invention is defined by the appended claims.

In 3GPP Rel-15, a CA activation command may be sent in a Medium Access Control (MAC) control element (CE). The minimum required activation delay is ~5 ms for a typical case. This is quite slow as compared to other NR procedures. Also, the maximum allowed activation delays are quite long as compared to other NR procedures. Due to such long delays, it is riskier for the network (e.g., network node) to frequently deactivate the Scell, since bringing the WD back to Scell activated state can take a minimum of ~5 ms to a maximum allowed value of tens or hundreds of milliseconds depending on specific scenarios and WD implementation. Yet, if the Scell operations are not stopped whenever possible, WD power consumption is unnecessarily increased.

Thus, some embodiments of the present disclosure provide mechanisms for faster Scell operation when compared to existing LTE or NR CA approaches. This can be accomplished by introducing new OSI Layer 1 (L1), i.e., physical layer, commands in addition to the existing MAC CE based higher layer signaling. The MAC CE based Scell activation/deactivation commands may control a first set of WD procedures/actions associated with the Scell [e.g., a) CSI reporting for Scell, b) PDCCH monitoring for SCell, c) PUCCH/SRS transmissions on the SCell]. The L1 commands may control a second set of WD procedures/actions [e.g., a) PDCCH monitoring for SCell, b) PUCCH/SRS transmissions on the SCell, c) bandwidth part (BWP) switching on Scell]. While the WD can receive both MAC CE based activation/deactivation commands and L1 based commands, the time for the WD to apply the second set of actions (associated with L1 commands) may be smaller than the time needed for applying the first set of actions (associated with the MAC CE based signaling).

In some embodiments, the proposed mechanisms may enable the network to control Scell procedures more dynamically by sending frequent L1 commands while continuing to use the MAC CE based activation/deactivation mechanism relatively infrequently. From the WD perspective, additional power savings can be achieved with this mechanism when compared with the current approach of only using MAC CE based activation/deactivation commands.

In some embodiments, for a WD configured with CA, the WD receives an L1 command in PDCCH downlink control information (DCI) with bit(s) corresponding to one or more SCell(s). For a first Scell of the one or more SCell(s) which is configured with only one BWP, the WD may use the bit(s) corresponding to the first Scell to turn on/turn off PDCCH monitoring for that SCell. For a second Scell of the one of more SCell(s) which is configured with multiple BWPs, the WD may use the bit(s) corresponding to the second Scell to determine a BWP (of the multiple BWPs) to use for operation on the second SCell. The WD may be configured with zero PDCCH candidates on one of the multiple BWPs configured for the second SCell.

Some embodiments of proposed L1 command structures can provide different options with varying trade-offs between flexibility and overhead to control Scell management actions for Scells with one or more configured BWPs.

Before describing in detail exemplary embodiments, it is noted that the embodiments reside primarily in combinations of apparatus components and processing steps related to L1 signaling for fast (e.g., as compared to existing arrangements) CA Scell management. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

As used herein, the term "command" used in "layer 1/L1 command" is intended broadly to encompass instructions, indicators, bits, a field in a control information message, etc. and is not intended to be limiting.

As used herein, the phrase "activating/deactivating" is intended broadly to encompass either activating an Scell, de-activating an Scell, activating/starting one or more procedures to be performed on the Scell, de-activating/stopping one or more procedures to be performed on the Scell and/or continuing a procedure that is already being performed on the Scell.

As used herein, the terms "operation," "procedure" and "action" are used interchangeably. Any two or more embodiments described in this disclosure may be combined in any way with each other.

Although the description herein may be explained in the context of a particular channel and a particular command, such as a PDCCH channel comprising an L1 command, it should be understood that the principles may also be applicable to other channels and other commands.

In some embodiments, control information on one or more resources may be considered to be transmitted in a message having a specific format. A message may comprise or represent bits representing payload information and coding bits, e.g., for error coding.

Receiving (or obtaining) control information may comprise receiving one or more control information messages (e.g., L1 command). It may be considered that receiving control signaling comprises demodulating and/or decoding and/or detecting, e.g. blind detection of, one or more messages, in particular a message carried by the control signaling, e.g. based on an assumed set of resources, which may be searched and/or listened for the control information. It may be assumed that both sides of the communication are aware of the configurations, and may determine the set of resources, e.g. based on the reference size.

Signaling may generally comprise one or more symbols and/or signals and/or messages. A signal may comprise or represent one or more bits. An indication may represent signaling, and/or be implemented as a signal, or as a plurality of signals. One or more signals may be included in and/or represented by a message. Signaling, in particular control signaling, may comprise a plurality of signals and/or messages, which may be transmitted on different carriers and/or be associated to different signaling processes, e.g. representing and/or pertaining to one or more such processes and/or corresponding information. An indication may comprise signaling, and/or a plurality of signals and/or messages and/or may be comprised therein, which may be transmitted on different carriers and/or be associated to different acknowledgement signaling processes, e.g. representing and/or pertaining to one or more such processes. Signaling associated to a channel may be transmitted such that represents signaling and/or information for that channel, and/or that the signaling is interpreted by the transmitter and/or receiver to belong to that channel. Such signaling may generally comply with transmission parameters and/or format/s for the channel.

An indication (e.g., bit map, field in DCI, etc.) generally may explicitly and/or implicitly indicate the information it represents and/or indicates. Implicit indication may for example be based on position and/or resource used for transmission. Explicit indication may for example be based on a parametrization with one or more parameters, and/or one or more index or indices corresponding to a table, and/or one or more bit patterns representing the information.

Configuring a radio node, in particular a terminal or WD, may refer to the radio node being adapted or caused or set and/or instructed to operate according to the configuration (e.g., to monitor an x-RNTI or a binary sequence for C-RNTI to determine which table to be used to interpret an indication or signal). Configuring may be done by another device, e.g., a network node (for example, a base station or gNB) or network, in which case it may comprise transmitting configuration data to the radio node to be configured. Such configuration data may represent the configuration to be configured and/or comprise one or more instruction pertaining to a configuration, e.g. a configuration for transmitting and/or receiving on allocated resources, in particular frequency resources. A radio node may configure itself, e.g., based on configuration data received from a network or network node. A network node may utilize, and/or be adapted to utilize, its circuitry/ies for configuring. Allocation information may be considered a form of configuration data. Configuration data may comprise and/or be represented by configuration information, and/or one or more corresponding indications and/or message/s.

A channel may generally be a logical or physical channel. A channel may comprise and/or be arranged on one or more carriers, in particular a plurality of subcarriers. A wireless communication network may comprise at least one network node, in particular a network node as described herein. A terminal (e.g., WD) connected or communicating with a network may be considered to be connected or communicating with at least one network node, in particular any one of the network nodes described herein.

Generally, configuring may include determining configuration data representing the configuration and providing, e.g. transmitting, it to one or more other nodes (parallel and/or sequentially), which may transmit it further to the radio node (or another node, which may be repeated until it reaches the wireless device). Alternatively, or additionally, configuring a radio node, e.g., by a network node or other device, may include receiving configuration data and/or data pertaining to configuration data, e.g., from another node like a network node, which may be a higher-level node of the network, and/or transmitting received configuration data to the radio node. Accordingly, determining a configuration and transmitting the configuration data to the radio node may be performed by different network nodes or entities, which may be able to communicate via a suitable interface, e.g., an X2 interface in the case of LTE or a corresponding interface for NR. Configuring a terminal (e.g. WD) may comprise scheduling downlink and/or uplink transmissions for the terminal, e.g. downlink data and/or downlink control signaling and/or DCI and/or uplink control or data or communication signaling, in particular acknowledgement signaling, and/or configuring resources and/or a resource pool therefor.

A cell may be generally a communication cell, e.g., of a cellular or mobile communication network, provided by a node. A serving cell may be a cell on or via which a network node (the node providing or associated to the cell, e.g., base station or eNodeB) transmits and/or may transmit data (which may be data other than broadcast data) to a user equipment, in particular control and/or user or payload data, and/or via or on which a user equipment transmits and/or may transmit data to the node; a serving cell may be a cell for or on which the user equipment is configured and/or to which it is synchronized and/or has performed an access procedure, e.g., a random access procedure, and/or in relation to which it is in a RRC_connected or RRC_idle state, e.g., in case the node and/or user equipment and/or network follow the a standard. One or more carriers (e.g., uplink and/or downlink carrier/s and/or a carrier for both uplink and downlink) may be associated to a cell.

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

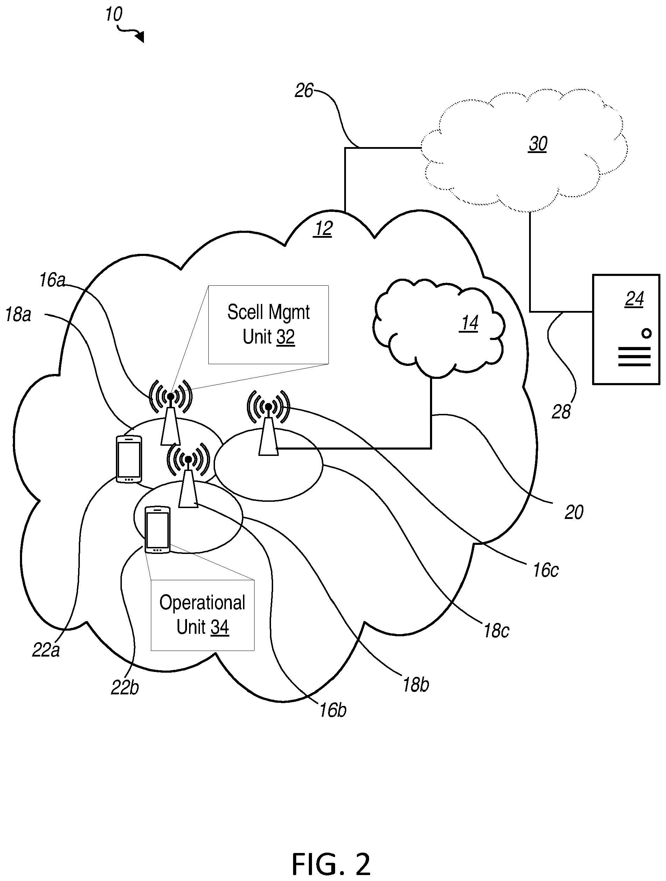

Referring again to the drawing figures, in which like elements are referred to by like reference numerals, there is shown in FIG. 2 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 2 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A network node 16 is configured to include a Scell management unit 32, the network node 16 and/or the Scell management unit 32 being configured to configure the WD 22 to operate on a first bandwidth part, BWP, of a plurality of bandwidth parts, BWPs, the plurality of BWPs being configured for the WD 22 on at least one secondary cell, Scell, of the one or more Scells and to send a command via a physical downlink control channel, PDCCH, signaling on a primary cell, the command indicating at least one procedure to be performed by the WD for the at least one Scell of the one or more Scells, the at least one procedure for the WD including operating on one of the first BWP and a second BWP of the plurality of bandwidth parts based on whether a first value or a second value is indicated for the at least one Scell by the command, the WD being configured to not monitor PDCCH for at least one of the first BWP and the second BWP. In some embodiments, the network node 16 is configured to include the Scell management unit 32 which is configured to cause a radio interface to signal a layer 1 command, the layer 1 command activating/deactivating a secondary cell for the WD 22.

A wireless device 22 is configured to include an operational unit 34, the wireless device 22 and/or the operational unit 34 being configured to operate on a first bandwidth part, BWP, of a plurality of bandwidth parts, BWPs, the plurality of BWPs being configured for the WD 22 on at least one secondary cell, Scell, of the one or more Scells and to receive a command via a physical downlink control channel, PDCCH, signaling on a primary cell; and responsive to receiving the command via the PDCCH signaling, perform at least one procedure for the at least one Scell of the one or more Scells, the at least one procedure including operating on one of the first BWP and a second BWP of the plurality of bandwidth parts based on whether a first value or a second value is indicated for the at least one Scell by the command, the WD being configured to not monitor PDCCH for at least one of the first BWP and the second BWP. In some embodiments, the wireless device 22 is configured to include the operational unit 34 which is configured to receive (and/or decode) a layer 1 command, the layer 1 command activating/deactivating a secondary cell (Scell) for the WD.

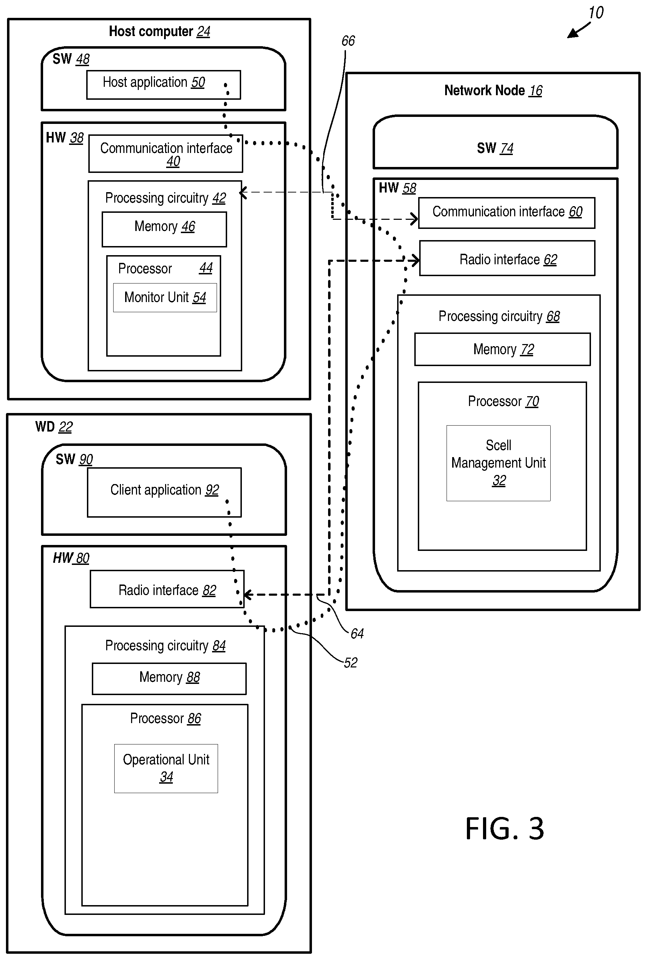

Example implementations, in accordance with an embodiment, of the WD 22, network node 16 and host computer 24 discussed in the preceding paragraphs will now be described with reference to FIG. 3. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and/or the wireless device 22. The processing circuitry 42 of the host computer 24 may include a monitor unit 54 configured to enable the service provider to observe, monitor, control, transmit to and/or receive from the network node 16 and/or the wireless device 22.

The communication system 10 further includes a network node 16 provided in a communication system 10 and including hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16. For example, processing circuitry 68 of the network node 16 may include Scell management unit 32 configured to cause the radio interface 62 to signal a layer 1 command, the layer 1 command activating/deactivating a secondary cell for the WD 22.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22. For example, the processing circuitry 84 of the wireless device 22 may include an operational unit 34 configured to receive a layer 1 command, the layer 1 command activating/deactivating a secondary cell (Scell) for the WD 22.

In some embodiments, the inner workings of the network node 16, WD 22, and host computer 24 may be as shown in FIG. 3 and independently, the surrounding network topology may be that of FIG. 2.

In FIG. 3, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/supporting/ending a transmission to the WD 22, and/or preparing/terminating/maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/supporting/ending a transmission to the network node 16, and/or preparing/terminating/maintaining/supporting/ending in receipt of a transmission from the network node 16.

Although FIGS. 2 and 3 show various "units" such as Scell management unit 32, and operational unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry.

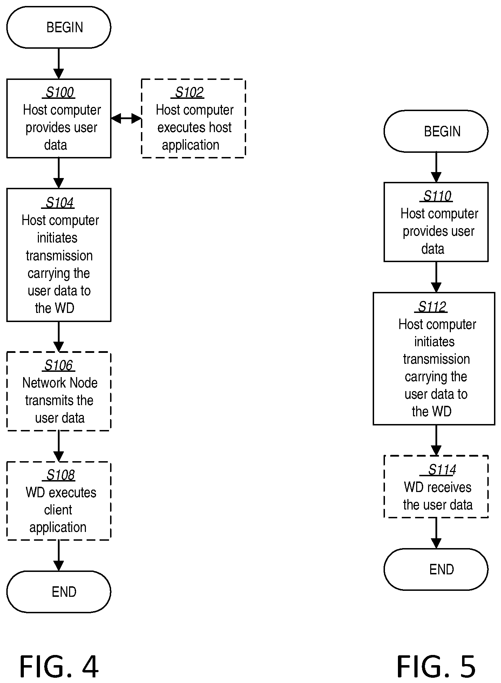

FIG. 4 is a flowchart illustrating an exemplary method implemented in a communication system, such as, for example, the communication system of FIGS. 2 and 3, in accordance with one embodiment. The communication system may include a host computer 24, a network node 16 and a WD 22, which may be those described with reference to FIG. 3. In a first step of the method, the host computer 24 provides user data (Block S100). In an optional substep of the first step, the host computer 24 provides the user data by executing a host application, such as, for example, the host application 50 (Block S102). In a second step, the host computer 24 initiates a transmission carrying the user data to the WD 22 (Block S104). In an optional third step, the network node 16 transmits to the WD 22 the user data which was carried in the transmission that the host computer 24 initiated, in accordance with the teachings of the embodiments described throughout this disclosure (Block S106). In an optional fourth step, the WD 22 executes a client application, such as, for example, the client application 92, associated with the host application 50 executed by the host computer 24 (Block S108).

FIG. 5 is a flowchart illustrating an exemplary method implemented in a communication system, such as, for example, the communication system of FIG. 2, in accordance with one embodiment. The communication system may include a host computer 24, a network node 16 and a WD 22, which may be those described with reference to FIGS. 2 and 3. In a first step of the method, the host computer 24 provides user data (Block S110). In an optional substep (not shown) the host computer 24 provides the user data by executing a host application, such as, for example, the host application 50. In a second step, the host computer 24 initiates a transmission carrying the user data to the WD 22 (Block S112). The transmission may pass via the network node 16, in accordance with the teachings of the embodiments described throughout this disclosure. In an optional third step, the WD 22 receives the user data carried in the transmission (Block S114).

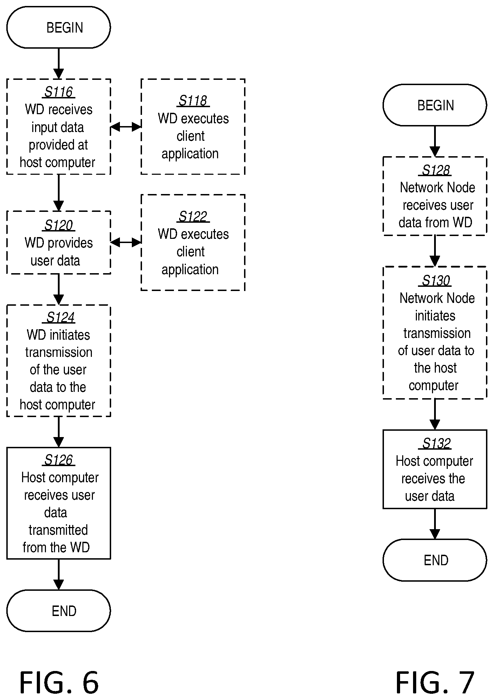

FIG. 6 is a flowchart illustrating an exemplary method implemented in a communication system, such as, for example, the communication system of FIG. 2, in accordance with one embodiment. The communication system may include a host computer 24, a network node 16 and a WD 22, which may be those described with reference to FIGS. 2 and 3. In an optional first step of the method, the WD 22 receives input data provided by the host computer 24 (Block S116). In an optional substep of the first step, the WD 22 executes the client application 92, which provides the user data in reaction to the received input data provided by the host computer 24 (Block S118). Additionally or alternatively, in an optional second step, the WD 22 provides user data (Block S120). In an optional substep of the second step, the WD provides the user data by executing a client application, such as, for example, client application 92 (Block S122). In providing the user data, the executed client application 92 may further consider user input received from the user. Regardless of the specific manner in which the user data was provided, the WD 22 may initiate, in an optional third substep, transmission of the user data to the host computer 24 (Block S124). In a fourth step of the method, the host computer 24 receives the user data transmitted from the WD 22, in accordance with the teachings of the embodiments described throughout this disclosure (Block S126).

FIG. 7 is a flowchart illustrating an exemplary method implemented in a communication system, such as, for example, the communication system of FIG. 2, in accordance with one embodiment. The communication system may include a host computer 24, a network node 16 and a WD 22, which may be those described with reference to FIGS. 2 and 3. In an optional first step of the method, in accordance with the teachings of the embodiments described throughout this disclosure, the network node 16 receives user data from the WD 22 (Block S128). In an optional second step, the network node 16 initiates transmission of the received user data to the host computer 24 (Block S130). In a third step, the host computer 24 receives the user data carried in the transmission initiated by the network node 16 (Block S132).

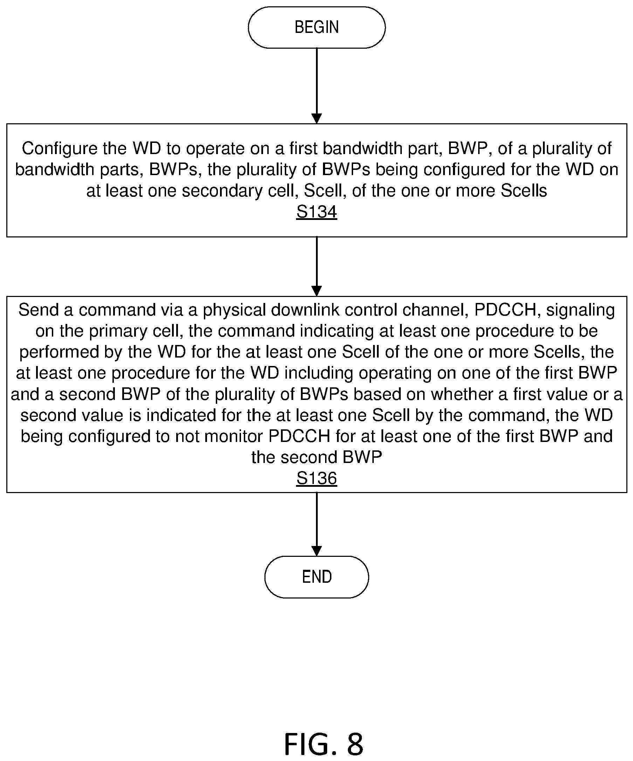

FIG. 8 is a flowchart of an exemplary process in a network node 16 for CA Scell management according to the claimed invention. One or more Blocks and/or functions and/or methods performed by the network node 16 may be performed by one or more elements of network node 16 such as by Scell management unit 32 in processing circuitry 68, processor 70, communication interface 60, radio interface 62, etc. according to the example method. The example method, implemented in a network node 16 configured to configure a wireless device, WD 22, to operate on a primary cell and one or more secondary cells, Scells, includes configuring (Block S134), such as via Scell management unit 32, processing circuitry 68, processor 70, communication interface 60 and/or radio interface 62, the WD 22 to operate on a first bandwidth part, BWP, of a plurality of bandwidth parts, BWPs, the plurality of BWPs being configured for the WD 22 on at least one secondary cell, Scell, of the one or more Scells. The method includes sending (Block S136), such as via Scell management unit 32, processing circuitry 68, processor 70, communication interface 60 and/or radio interface 62, a command via a physical downlink control channel, PDCCH, signaling on the primary cell, the command indicating at least one procedure to be performed by the WD 22 for the at least one Scell of the one or more Scells, the at least one procedure for the WD 22 including operating on one of the first BWP and a second BWP of the plurality of bandwidth parts based on whether a first value or a second value is indicated for the at least one Scell by the command, the WD 22 being configured to not monitor PDCCH for one of the first BWP and the second BWP.

In some embodiments, when the WD 22 is configured to monitor PDCCH when operating on the first BWP, the at least one procedure for the at least one Scell includes the WD 22 switching to operate on the second BWP when the first value is indicated for the at least one Scell by the command, the WD 22 being configured to not monitor PDCCH when operating on the second BWP. In this case the network node 16 may, in some embodiments, such as via Scell management unit 32, processing circuitry 68, processor 70, communication interface 60 and/or radio interface 62, cause the WD 22 to switch to operate on the second BWP when the first value is indicated for the at least one Scell by the command, the WD 22 being configured to not monitor PDCCH when operating on the second BWP. In some embodiments, the at least one procedure for the at least one Scell further includes the WD 22 continuing to operate on the first BWP when the second value is indicated for the at least one Scell by the command. In this case the network node 16 may, in some embodiments, such as via Scell management unit 32, processing circuitry 68, processor 70, communication interface 60 and/or radio interface 62, cause the WD 22 to continue to operate on the first BWP when the second value is indicated for the at least one Scell by the command. In some embodiments, when the WD 22 is configured to not monitor PDCCH when operating on the first BWP, the at least one procedure for the at least one Scell includes the WD 22 continuing to operate on the first BWP when the first value is indicated for the at least one Scell by the command. In this case the network node 16 may, in some embodiments, such as via Scell management unit 32, processing circuitry 68, processor 70, communication interface 60 and/or radio interface 62, cause the WD 22 to continue to operate on the first BWP when the first value is indicated for the at least one Scell by the command.

In some embodiments, the at least one procedure for the at least one Scell further includes the WD 22 switching to operate on the second BWP when the second value is indicated for the at least one Scell by the command, the WD 22 being configured to monitor PDCCH when operating on the second BWP. In this case the network node 16 may, in some embodiments, such as via Scell management unit 32, processing circuitry 68, processor 70, communication interface 60 and/or radio interface 62, cause the WD 22 to switch to operate on the second BWP when the second value is indicated for the at least one Scell by the command, the WD 22 being configured to monitor PDCCH when operating on the second BWP. In some embodiments, a bandwidth part, BWP, index, for the second BWP is configured by higher layers. For example, the second BWP may be configured with a specific BWP index by or via the higher layers. The specific BWP index may in some embodiments be *a firstActiveDownlinkBWP-Id,* see example further down below. In some embodiments, the first value is 0 and the second value is 1.

According to the claimed invention, one of the first BWP and the second BWP is configured with one or more PDCCH candidates. The one of the first BWP and the second BWP for which the WD is configured to not monitor PDCCH is a BWP configured with no PDCCH candidates. The method includes sending, such as via Scell management unit 32, processing circuitry 68, processor 70, communication interface 60 and/or radio interface 62, radio resource control, RRC, signaling, the RRC signaling indicating the BWP configured with no PDCCH candidates.

In some embodiments, when the WD 22 is configured to not monitor PDCCH when operating on the first BWP and the second value is indicated for the at least one Scell by the command, the second BWP is a BWP with a lowest BWP index among a plurality of indices, each BWP index corresponding to a respective one of the plurality of BWPs. In some embodiments, when the WD 22 is configured to not monitor PDCCH when operating on the first BWP and the second value is indicated for the at least one Scell by the command, the second BWP is based at least in part on a most recent active BWP for which the WD 22 is configured to monitor PDCCH. In some embodiments, the method further includes sending, such as via Scell management unit 32, processing circuitry 68, processor 70, communication interface 60 and/or radio interface 62, a higher layer signaling, the higher layer signaling including an index, such as a BWP index, indicating one of the first BWP and the second BWP. In some embodiments, the higher layer signaling is one of a radio resource control, RRC, signaling and a medium access control, MAC, control element, CE, signaling. In some embodiments, sending the command via the PDCCH signaling comprises sending, such as via Scell management unit 32, processing circuitry 68, processor 70, communication interface 60 and/or radio interface 62, a physical uplink control channel, PUCCH, resource indicator in a downlink control information, DCI, the PUCCH resource indicator indicating a resource, such as a PUCCH resource, for a Hybrid Automatic Repeat reQuest Acknowledgement, HARQ-ACK, for the command.

In some embodiments, sending the command via the PDCCH signaling further includes, such as via Scell management unit 32, processing circuitry 68, processor 70, communication interface 60 and/or radio interface 62, sending a Hybrid Automatic Repeat reQuest, HARQ, feedback timing indicator in the DCI, the HARQ feedback timing indicator indicating a resource, such as a slot, for a HARQ-ACK for the command. In some embodiments, sending the command via the PDCCH signaling includes sending, such as via Scell management unit 32, processing circuitry 68, processor 70, communication interface 60 and/or radio interface 62, the command as a wake-up signal. In some embodiments, the command is included in a physical downlink control channel, PDCCH, downlink control information, DCI, along with a set of bits for power savings when the WD 22 is configured to receive a PDCCH DCI format configured for power savings. In some embodiments, the WD 22 is configured with N Scells and the command includes N bits, each bit of the N bits corresponding to a respective one of the N Scells. Each of the N bits may indicate the first or the second value for the respective one of the N Scells. In some embodiments, when at least a second Scell of the one or more Scells is configured with a single bandwidth part, BWP, sending, such as via Scell management unit 32, processing circuitry 68, processor 70, communication interface 60 and/or radio interface 62, the command via the PDCCH signaling may indicate to the WD 22 to monitor or not monitor PDCCH on the single BWP of the second Scell based on whether the first value or the second value is indicated for the second Scell by the command. For example, when the WD 22 is configured with a single BWP for a second Scell of the one or more Scells, sending, such as via Scell management unit 32, processing circuitry 68, processor 70, communication interface 60 and/or radio interface 62, the command via the PDCCH signaling may indicate to the WD 22 to monitor or not monitor PDCCH on the single BWP of the second Scell based on whether the first value or the second value is indicated for the second Scell by the command.

In some embodiments, the method includes signalling, such as via a Scell management unit 32, processing circuitry 68, processor 70, and/or radio interface 62, a layer 1 command, the layer 1 command activating/deactivating a secondary cell for a wireless device (WD) 22.

In some embodiments, the layer 1 command corresponds to a first delay time period before the WD 22 can perform a first set of procedures, the first set of procedures being different from a second set of procedures associated with a higher layer Scell activation/deactivation command. In some embodiments, the first delay time period is less than a second delay time period associated with the higher layer Scell activation/deactivation command. In some embodiments, the layer 1 command is included in a downlink control information (DCI) message sent via a physical downlink control channel (PDCCH). In some embodiments, the layer 1 command includes a bit map, each bit in the bit map activating/deactivating one of a plurality of Scells configured for the WD 22. In some embodiments, the layer 1 command includes a bit map, each bit in the bit map starting/stopping/continuing the at least one of the first set of procedures configured for the WD in the Scell. In some embodiments, the first set of procedures comprises PDCCH monitoring on the Scell, performing uplink transmissions on the SCell and bandwidth part (BWP) switching in the Scell. In some embodiments, the layer 1 command indicates to the WD 22 to switch BWPs based at least in part on which BWP is configured with PDCCH monitoring candidates. In some embodiments, the layer 1 command indicates a BWP index value of a BWP to which the WD 22 is to switch in the Scell. In some embodiments, the layer 1 command includes a bit map, the bit map mapping to BWPs in the Scell. In some embodiments, the method further includes transmitting, such as via a Scell management unit 32, processing circuitry 68, processor 70, and/or radio interface 62, a higher layer signaling indicating a number of bits for the layer 1 command. In some embodiments, a duration of the first delay time period is based at least in part on an offset value included, such as via a Scell management unit 32, processing circuitry 68, processor 70, and/or radio interface 62, in one of the DCI and higher layer signaling.

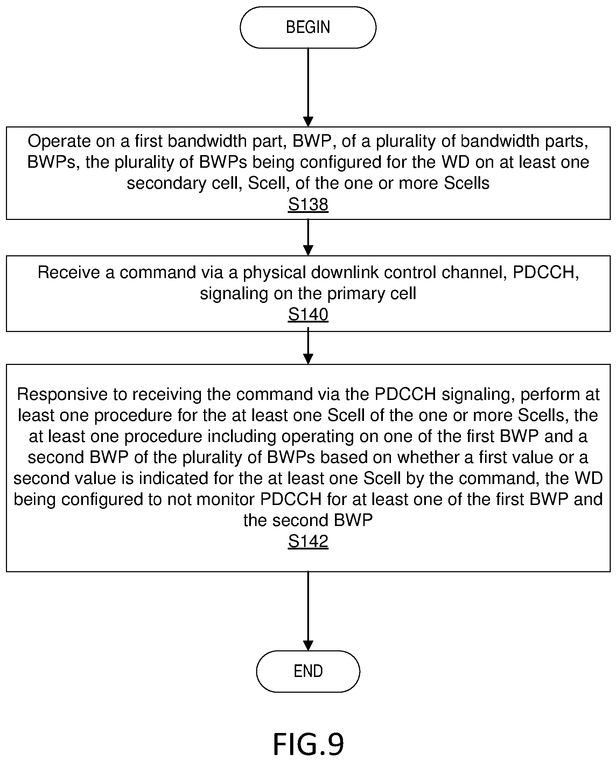

FIG. 9 is a flowchart of an exemplary process in a wireless device 22 for CA Scell management according to the claimed invention. One or more Blocks and/or functions and/or methods performed by WD 22 may be performed by one or more elements of WD 22 such as by operational unit 34 in processing circuitry 84, processor 86, radio interface 82, etc. The example method, in the WD 22 configured to operate on a primary cell and one or more secondary cells, Scells, includes operating (Block S138), such as by operational unit 34, processing circuitry 84, processor 86 and/or radio interface 82, on a first bandwidth part, BWP, of a plurality of bandwidth parts, BWPs, the plurality of BWPs being configured for the WD 22 on at least one secondary cell, Scell, of the one or more Scells. The method includes receiving (Block S140), such as by operational unit 34, processing circuitry 84, processor 86 and/or radio interface 82, a command via a physical downlink control channel, PDCCH, signaling on the primary cell. The method includes responsive to receiving the command via the PDCCH signaling, performing (Block S142), such as by operational unit 34, processing circuitry 84, processor 86 and/or radio interface 82, at least one procedure for the at least one Scell of the one or more Scells, the at least one procedure including operating on one of the first BWP and a second BWP of the plurality of bandwidth parts based on whether a first value or a second value is indicated for the at least one Scell by the command, the WD 22 being configured to not monitor PDCCH for one of the first BWP and the second BWP.

In some embodiments, when the WD 22 is configured to monitor PDCCH when operating on the first BWP, performing the at least one procedure for the at least one Scell includes switching, such as by operational unit 34, processing circuitry 84, processor 86 and/or radio interface 82, to operate on the second BWP when the first value is indicated for the at least one Scell by the command, the WD 22 being configured to not monitor PDCCH when operating on the second BWP. In some embodiments, performing the at least one procedure for the at least one Scell further includes continuing, such as by operational unit 34, processing circuitry 84, processor 86 and/or radio interface 82, to operate on the first BWP when the second value is indicated for the at least one Scell by the command. In some embodiments, when the WD 22 is configured to not monitor PDCCH when operating on the first BWP, performing the at least one procedure for the at least one Scell includes continuing, such as by operational unit 34, processing circuitry 84, processor 86 and/or radio interface 82, to operate on the first BWP when the first value is indicated for the at least one Scell by the command. In some embodiments, performing the at least one procedure for the at least one Scell further includes switching, such as by operational unit 34, processing circuitry 84, processor 86 and/or radio interface 82, to operate on the second BWP when the second value is indicated for the at least one Scell by the command, wherein the WD 22 is configured to monitor PDCCH when operating on the second BWP.

In some embodiments, a bandwidth part, BWP, index, for the second BWP is configured by higher layers. For example, the second BWP may be configured with a specific BWP index, e.g., a *firstActiveDownlinkBWP-Id,* by or via the higher layers. In some embodiments, the first value is 0 and the second value is 1.

According to the claimed invention, one of the first BWP and the second BWP is configured with one or more PDCCH candidates. The one of the first BWP and the second BWP for which the WD 22 is configured to not monitor PDCCH is a BWP configured with no PDCCH candidates. The method further includes receiving, such as by operational unit 34, processing circuitry 84, processor 86 and/or radio interface 82, radio resource control, RRC, signaling, the RRC signaling indicating the BWP configured with no PDCCH candidates.

In some embodiments, when the WD is configured to not monitor PDCCH when operating on the first BWP and the second value is indicated for the at least one Scell by the command, the second BWP is a BWP with a lowest BWP index among a plurality of indices, each BWP index corresponding to respective one of the plurality of BWPs.

In some embodiments, when the WD is configured to not monitor PDCCH when operating on the first BWP and the second value is indicated for the at least one Scell by the command, the second BWP is based at least in part on a most recent active BWP for which the WD is configured to monitor PDCCH. In some embodiments, the method further includes receiving, such as by operational unit 34, processing circuitry 84, processor 86 and/or radio interface 82,a higher layer signaling, the higher layer signaling including an index, such as a BWP index, indicating one of the first BWP and the second BWP. In some embodiments, the higher layer signaling is one of a radio resource control, RRC, signaling and a medium access control, MAC, control element, CE, signaling. In some embodiments, receiving the command via the PDCCH signaling comprises receiving, such as by operational unit 34, processing circuitry 84, processor 86 and/or radio interface 82, a physical uplink control channel, PUCCH, resource indicator in a downlink control information, DCI, the PUCCH resource indicator indicating a resource, such as a PUCCH resource, for a Hybrid Automatic Repeat reQuest Acknowledgement, HARQ-ACK, for the command.

In some embodiments, receiving the command via the PDCCH signaling further comprises receiving, such as by operational unit 34, processing circuitry 84, processor 86 and/or radio interface 82,a Hybrid Automatic Repeat reQuest, HARQ, feedback timing indicator in the DCI, the HARQ feedback timing indicator indicating a resource, such as a slot, for a HARQ-ACK for the command. In some embodiments, receiving the command via the PDCCH signaling comprises receiving, such as by operational unit 34, processing circuitry 84, processor 86 and/or radio interface 82, the command as a wake-up signal. In some embodiments, the command is included in a physical downlink control channel, PDCCH, downlink control information, DCI, along with a set of bits for power savings when the WD 22 is configured to receive a PDCCH DCI format configured for power savings. In some embodiments, the WD 22 is configured with N Scells and the command includes N bits, each bit of the N bits corresponding to a respective one of the N Scells. Each of the N bits may indicate the first or the second value for the respective one of the N Scells. In some embodiments, when at least a second Scell of the one or more Scells is configured with a single bandwidth part, BWP, the WD 22 may, responsive to receiving the command via the PDCCH signaling, be configured to monitor or not monitor, such as by operational unit 34, processing circuitry 84, processor 86 and/or radio interface 82, PDCCH on the single BWP of the second Scell based on whether the first value or the second value is indicated for the second Scell by the command. For example, when the WD 22 is configured with a single BWP for a second Scell of the one or more Scells, the WD 22 may be configured to, responsive to receiving the command via the PDCCH signaling, monitor or not monitor PDCCH on the single BWP of the second Scell based on whether the first value or the second value is indicated for the second Scell by the command.

In some embodiments, the method includes receiving, such as via operational unit 34, processing circuitry 84, processor 86, radio interface 82, a layer 1 command, the layer 1 command activating/deactivating a secondary cell (Scell) for the WD 22.

In some embodiments, responsive to the layer 1 command, one of:
after a first delay time period, performing, such as via operational unit 34, processing circuitry 84, processor 86, radio interface 82, at least one of a first set of procedures, the first set of procedures being different from a second set of procedures associated with a higher layer Scell activation/deactivation command;
continuing to perform, such as via operational unit 34, processing circuitry 84, processor 86, radio interface 82, the at least one of the first set of procedures; and
stopping performance, such as via operational unit 34, processing circuitry 84, processor 86, radio interface 82, of the at least one of the first set of procedures.

In some embodiments, the first delay time period is less than a second delay time period associated with the higher layer Scell activation/deactivation command. In some embodiments, the layer 1 command is included in a downlink control information (DCI) message via a physical downlink control channel (PDCCH). In some embodiments, the layer 1 command includes a bit map, each bit in the bit map activating/deactivating one of a plurality of Scells configured for the WD 22. In some embodiments, the layer 1 command includes a bit map, each bit in the bit map starting/stopping/continuing the at least one of the first set of procedures configured for the WD 22 in the Scell. In some embodiments, the first set of procedures comprises PDCCH monitoring, such as via operational unit 34, processing circuitry 84, processor 86, radio interface 82, on the Scell, performing uplink transmissions, such as via operational unit 34, processing circuitry 84, processor 86, radio interface 82, on the SCell and bandwidth part (BWP) switching, such as via operational unit 34, processing circuitry 84, processor 86, radio interface 82, in the Scell. In some embodiments, the processing circuitry 84 is further configured to switch BWPs based on the layer 1 command and which BWP is configured with PDCCH monitoring candidates. In some embodiments, the layer 1 command indicates a BWP index value of a BWP to which the WD 22 is to switch in the Scell. In some embodiments, the layer 1 command includes a bit map, the bit map mapping to BWPs in the Scell. In some embodiments, the processing circuitry 84 is configured to receive a higher layer signaling indicating a number of bits for the layer 1 command. In some embodiments, a duration of the first delay time period is based at least in part on an offset value included in one of the DCI and higher layer signaling.

Having described the general process flow of arrangements of the disclosure and having provided examples of hardware and software arrangements for implementing the processes and functions of the disclosure, and which may be implemented by the network node 16, wireless device 22 and/or host computer 24, the sections below provide details and examples of arrangements for L1 signaling for fast CA Scell management, as compared to existing arrangements.

In some embodiments, a WD 22 communicates with the network (e.g., network node 16) using a primary serving cell (Pcell). The WD 22 may also configured with one or more secondary serving cells (Scell(s)). The WD 22 receives a higher layer Scell activation/deactivation command. Upon reception of the higher layer activation/deactivation command (e.g., transmitted by the network node 16), the WD 22 starts/stops performing a first set of actions. The first set of actions may include periodic CSI reporting for the Scell (e.g., if the WD 22 is configured for periodic CSI reporting). The first set of actions can also include PDCCH monitoring on the Scell. If the WD 22 is configured with multiple BWPs for the Scell, the PDCCH monitoring can be on a preconfigured/default BWP of the Scell. If the WD 22 receives the higher layer activation command in time slot n, the WD 22 may apply the first set of actions starting with slot n+D1 (i.e., after an activation delay of D1 slots).

The WD 22 may also receive a physical layer command (e.g., an L1 command) (e.g., transmitted by the network node 16). Upon reception of the L1 command, the WD 22 starts/stops performing a second set of actions. The second set of actions can be PDCCH monitoring or BWP switching as discussed in the examples below. The second set of actions for an Scell can be different based on whether the WD 22 is configured with one BWP for the Scell or whether it is configured with multiple BWPs for the Scell. If the WD 22 receives the L1 command in time slot n1, the WD 22 may apply the second set of actions starting with slot n1+D2 (i.e., after a delay of D2 slots). The delay D2 is smaller than D1.

The higher layer Scell activation/deactivation command (e.g., transmitted by the network node 16) can be received by the WD 22 in a MAC CE (MAC control element). The first set of actions can also include transmitting PUCCH/ periodic SRS on the Scell. The L1 command (e.g., transmitted by the network node 16) can be received by the WD 22 using a PDCCH. For example, the L1 command can be part of PDCCH DCI (downlink control information). The PDCCH DCI corresponding to the L1 command can include the bits corresponding to the Scell(s) configured for the WD 22 based on which the WD 22 performs the second set of actions. The bits can be according to the examples discussed herein.

In the following, some options/embodiments are described below as examples. It is understood that any one or more of the features described in the various example options/embodiments can be combined with another in any manner.

### Option/Embodiment 1

In one example (option 1), the WD 22 is configured with N SCell(s). The PDCCH DCI corresponding to the L1 command can include N bits (b0,b1,...bN-1): b0 can correspond to Scell0 e.g., an Scell with lowest cell index among the configured Scell(s), b1 can correspond to Scell1, e.g., Scell with next lowest cell index among the configured Scell(s) and so on. If b0 is set for a first state (e.g., 1) the WD 22 can start PDCCH monitoring on the Scell0 and if b0 is set to a second state (e.g., 0) the WD 22 can stop PDCCH monitoring on the Scell0. If the WD 22 is already monitoring PDCCH on Scell0 prior to receiving b0 set to first state, the WD 22 continues PDCCH monitoring on that Scell. If the WD 22 is configured (e.g., by the network node 16) with multiple BWPs for Scell0, and if the WD 22 receives (e.g., via radio interface 82) L1 command with b0 set to a second state, the WD 22 can stop monitoring PDCCH on the current active BWP of Scell0 or alternately on all BWPs of SCell0. If the WD 22 is configured (e.g., by the network node 16) with multiple BWPs for Scell0, and if the WD 22 receives (e.g., via radio interface 82) L1 command with b0 set to first state, and the WD 22 is not monitoring PDCCH on Scell0 prior to receiving the L1 command, the WD 22 can start PDCCH monitoring on one of the multiple BWPs configured for Scell0. The BWP on which the WD 22 can start PDCCH monitoring can be preconfigured by higher layer (e.g., radio resource control (RRC)) signaling (e.g., by network node 16). In one alternative, the WD 22 can start PDCCH monitoring on a BWP with specific BWP-index (e.g., *firstActiveDownlinkBWP-Id)* configured by higher layers. In another alternative, the WD 22 can start PDCCH monitoring (e.g., via processing circuitry 84, operational unit 34 and/or radio interface 82) on a default DL BWP configured by higher layers. In another alternative, the WD 22 can start PDCCH monitoring on a BWP with lowest index among the DL BWPs configured for SCell0. If the WD 22 is already monitoring PDCCH on Scell0 prior to receiving b0 set to first state, WD 22 can continue PDCCH monitoring on its current active BWP of Scell0. Similar procedure may be used for other Scells configured for the WD 22.

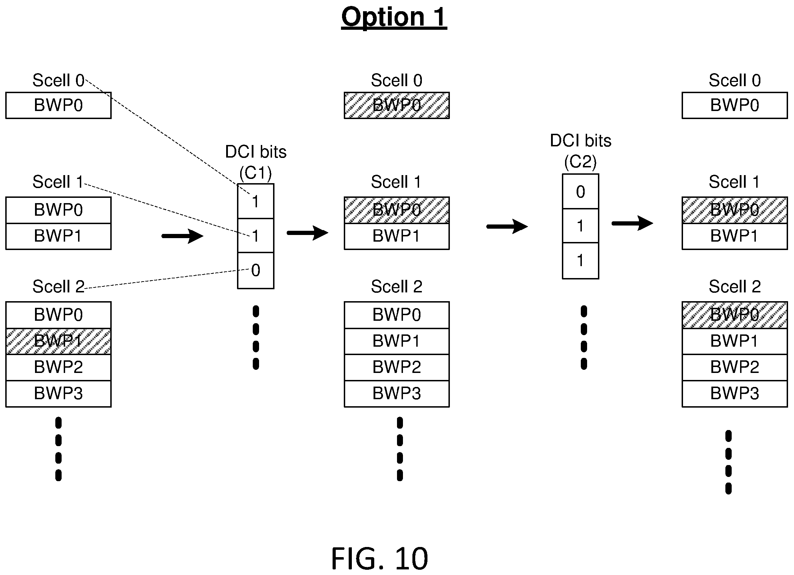

FIG. 10 shows an example with option 1. In FIG. 10, WD 22 is configured with Scell0 (with one BWP), SCell1 (with two BWPs) and Scell2 (with 4 BWPs). All three Scells are in activated state (e.g., using a MAC CE based Scell activation command). Before reception of an L1 command C1, the WD 22 is not monitoring PDCCH on Scell0, Scell1 but monitoring PDCCH on BWP1 of Scell2 (as shown in the first column shown in FIG. 10 with shading on Scell2 BWP1). Upon reception of an L1 command C1 with DCI bits corresponding to {SCell0,SCell1,Scell2} set to {1,1,0} respectively, the WD 22 starts PDCCH monitoring (e.g., via processing circuitry 84, operational unit 34 and/or radio interface 82) on Scell0 (as indicated by the shading in Scell0 BWPO), Scell1 (e.g., on BWPO of Scell1 which can be default/preconfigured BWP for this Scell), and stops PDCCH monitoring (e.g., via processing circuitry 84, operational unit 34 and/or radio interface 82) on Scell2 (since the bit associated with Scell2 was set to the second state/0). Upon reception of an L1 command C2 (e.g., via radio interface 82) with DCI bits corresponding to {SCell0,SCell1,Scell2} set to {0,1,1} respectively, the WD 22 stops PDCCH monitoring on Scell0, continues PDCCH monitoring on its current active BWP (i.e., BWPO) and starts PDCCH monitoring on Scell2 (e.g. on BWPO of Scell2 which can be default/preconfigured BWP for this Scell).

### Option/Embodiment 2

In another example (option 2), the WD 22 is configured with N SCell(s). The PDCCH DCI corresponding to the L1 command can include N bits (b0,b1,...bN-1). For some or all of the N SCells, the WD 22 can be configured (e.g., by network node 16) with more than one BWP. If the WD 22 is configured with only one BWP for SCellx of the N Scells, the WD 22 can start/stop PDCCH monitoring on Scellx based on the state indicated by bit bx corresponding to Scellx (i.e., similar procedure as described for option 1 above where if bx is set for a first state (e.g., 1) the WD 22 can start/continue PDCCH monitoring on the Scellx and if bx is set to a second state (e.g., 0) the WD 22 can stop PDCCH monitoring on the Scellx). If the WD 22 is configured with multiple BWPs (e.g., by network node 16) for Scelly of the N Scells, and if bit 'by' corresponding to Scelly indicates a first state (e.g., 0), the WD 22 can perform a BWP switch operation (e.g., via processing circuitry 84, operational unit 34 and/or radio interface 82) by switching from its current active BWP (BWPc) to a predefined BWP (BWPd). BWPd can be a BWP for which the WD 22 is not configured to monitor PDCCH (e.g., zero PDCCH monitoring candidates are configured for all search spaces and for aggregation levels configured for BWPd). If bit 'by' corresponding to Scelly indicates a second state (e.g., 1), the WD 22 can perform a BWP switch operation (e.g., via processing circuitry 84, operational unit 34 and/or radio interface 82) by switching to a BWP (BWPe) for which the WD 22 is configured to monitor PDCCH. In one alternative, BWPe can be a BWP with specific BWP-index (e.g. *firstActiveDownlinkBWP-Id)* configured by higher layers (e.g., by network node 16). In another alternative, BWPe can be a default DL BWP configured by higher layers (e.g., by network node 16). In another alternative, BWPe can be a BWP with lowest index among the DL BWPs configured for SCelly.

In another alternative BWPe can be the most recent current active BWP for the WD 22 on which it was monitoring PDCCH. If bit 'by' corresponding to Scelly indicates the second state (e.g., 1), the WD 22 can perform a BWP switch operation (e.g., via processing circuitry 84, operational unit 34 and/or radio interface 82) by switching to a BWP (BWPe) for which the WD 22 is configured to monitor PDCCH only if prior to receiving the L1 command with bit 'by', the WD 22 is operating on a BWP for which the WD 22 is not configured to monitor PDCCH (e.g. BWPd). If the WD 22 is operating on a BWP with PDCCH monitoring prior to receiving the L1 command with bit 'by' indicating second state, the WD 22 can continue operating on that BWP (e.g., via processing circuitry 84, operational unit 34 and/or radio interface 82) and not perform any BWP switch operation.

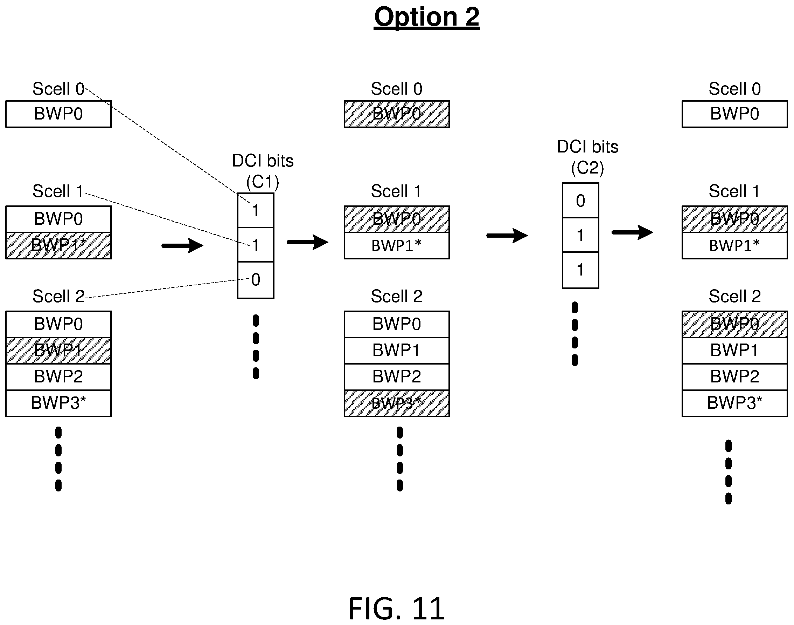

FIG. 11 shows an example with option 2. In FIG. 11, WD 22 is configured with Scell0 (with one BWP), SCell1 (with two BWPs) and Scell2 (with 4 BWPs) e.g., by network node 16. All three Scells are in activated state (e.g., using a MAC CE based Scell activation command). Furthermore, BWP1 of Scell1 and BWP3 of SCell2 are not configured with any PDCCH monitoring candidates (e.g. denoted by BWP1* and BWP3* for convenience in FIG. 11). Before reception of an L1 command C1, the WD 22 is not monitoring PDCCH on Scell0; on Scell1, the WD 22 is operating on BWP1 (which has no PDCCH monitoring candidates); and on Scell2 the WD 22 is operating on BWP1 (which has PDCCH monitoring candidates). Upon reception of an L1 command C1 with DCI bits corresponding to {SCell0,SCell1,Scell2} set to {1,1,0} respectively, the WD 22 starts PDCCH monitoring (e.g., via processing circuitry 84, operational unit 34 and/or radio interface 82) on Scell0; on Scell1 WD 22 switches to BWPO (i.e., the BWP with PDCCH monitoring candidates); on Scell2 WD 22 switches to BWP3 (i.e., the BWP which has no PDCCH monitoring candidates since zero is indicated for this Scell). Upon reception of an L1 command C2 with DCI bits corresponding to {SCell0,SCell1,Scell2} set to {0,1,1} respectively, the WD 22 stops PDCCH monitoring on Scell0 (since DCI bit set to 0); on Scell1 WD 22 continues operating on BWPO; and on Scell2 WD 22 switches to BWPO (which has PDCCH monitoring candidates and which can also be e.g. default/preconfigured BWP for this Scell).

### Option/Embodiment 3

In another example (option 3), the WD 22 can be configured with N SCell(s) and for some or all of the N SCells the WD 22 can be configured (such as by network node 16) with more than one BWP. For this example, if the WD 22 is configured with NBx BWPs for Scellx of the N SCells, where NBx>1, the PDCCH DCI corresponding to the L1 command can include ceil(log2(NBx)) bits (where log2() is logarithm with base 2) corresponding to Scellx. If Scellx is configured with only one BWP the DCI includes 1 bit for Scellx and similar procedure as described for option 1 above is applied where if the one bit bx corresponding to Scellx is set for a first state (e.g. 1) the WD 22 can start/continue PDCCH monitoring on the Scellx and if bx is set to second state (e.g. 0) the WD 22 can stop PDCCH monitoring on the Scellx. If Scellx is configured with NBx>1 BWPs (e.g., by network node 16), the ceil(log2(NBx)) bits indicate the BWP index to which the WD 22 should switch upon reception of the L1 command. i.e., if NBx=2, there is one bit for Scellx and WD 22 switches to either first BWP of Scellx or second BWP of SCellx based on the one bit. If NBx=3, there are 2 bits for Scellx and WD 22 switches (e.g., via processing circuitry 84, operational unit 34 and/or radio interface 82) to one of first, second or third BWPs given by 3 of the 4 states indicated by the two bits. The fourth state indicated by these bits can be reserved. If NBx=4, there are 2 bits for Scellx and WD 22 switches to one of first, second, third or fourth BWPs given by the 4 states indicated by the two bits. If NBx>1 BWPs are configured for Scellx, one of the BWPs can be a BWP for which the WD 22 is not configured to monitor PDCCH (e.g., zero PDCCH monitoring candidates are configured for all search spaces and for aggregation levels configured for that BWP). While option 3 may be more flexible than options 1 or 2 discussed above, it may also have more overhead compared to these options. A single DCI can be used for joint indication of BWP switching on some of the Scells and to start/stop PDCCH monitoring on a single BWP for some other of the Scells e.g., on Scells that correspond to single BWP.

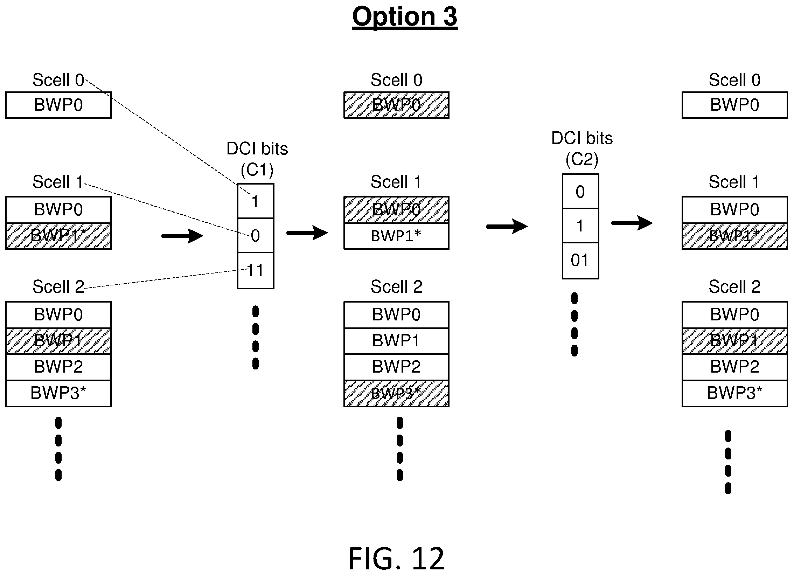

FIG. 12 shows an example with option 3. In FIG. 12, WD 22 is configured with Scell0 (with one BWP), SCell1 (with two BWPs) and Scell2 (with 4 BWPs). All three Scells are in activated state (e.g., using a MAC CE based Scell activation command). Furthermore, BWP1 of Scell1 and BWP3 of SCell2 are not configured with any PDCCH monitoring candidates (e.g. denoted by BWP1* and BWP3* for convenience in Figure). Before reception of an L1 command C1, the WD 22 is not monitoring PDCCH on Scell0; on Scell1, the WD 22 is operating on BWP1 (which has no PDCCH monitoring candidates); and on Scell2 the WD 22 is operating on BWP1 (which has PDCCH monitoring candidates). Upon reception of an L1 command C1 (e.g., via radio interface 82) with DCI bits corresponding to {SCell0,SCell1,Scell2} set to {1,0,11} respectively (i.e., here 1 bit for Scell0 since it has only one BWP, ceil(log2(2))=1 bit for Scell1, and ceil(log2(4))=2 bits for Scell2), the WD 22 starts PDCCH monitoring (e.g., via processing circuitry 84, operational unit 34 and/or radio interface 82) on Scell0; on Scell1, since DCI bit indicates 0, WD 22 switches to BWPO which has index 0; on Scell2, since the DCI bits indicate 11, WD 22 switches to BWP3 which has index3 (i.e., in this example, bit states 00 maps to BWPO, 01 maps to BWP1, 10 maps to BWP2, 11 maps to BWP3). Upon reception of an L1 command C2 (e.g., via radio interface 82) with DCI bits corresponding to {SCell0,SCell1,Scell2} set to {0,1,01} respectively, the WD 22 stops PDCCH monitoring on Scell0; on Scell1, the WD 22 switches to BWP1 which has index1; and on Scell2 the WD 22 switches to BWP1 which has index 1 which is mapped to DCI bit state 01.

### Option/Embodiment 4

As another example (option 4), the WD 22 can be configured with N SCell(s) and for some or all of the N SCells the WD 22 can be configured with more than one BWP (e.g., by network node 16). For this example, if the WD 22 is configured with NBx BWPs for Scellx of the N SCells, the PDCCH DCI corresponding to the L1 command can include a bitmap of NBx bits with first bit of the bitmap corresponding to first BWP of NBx BWPs, second bit corresponding to a second BWP of NBx BWPs and so on. Thus, the DCI can include N such bitmaps for N Scells. For Scellx, the WD 22 starts/continues monitoring PDCCH (e.g., via processing circuitry 84, operational unit 34 and/or radio interface 82) for those BWPs whose bits are set to 1 and stops PDCCH monitoring (e.g., via processing circuitry 84, operational unit 34 and/or radio interface 82) for those BWPs whose bits are set to 0. Similar to above examples, if the WD 22 is configured with only one BWP for Scellx, the bit indicates whether WD 22 can start/stop monitoring PDCCH for that SCell. Option 4 has more overhead than options 1,2,3 but can provide extra flexibility e.g., for cases where WD 22 can operate with more than one active BWP in a given serving cell at a given time.

The PDCCH DCI (e.g., from network node 16) corresponding to the L1 command can include a PUCCH resource indicator (e.g., 3 bits). In response to detecting or successfully decoding (e.g., via processing circuitry 84, operational unit 34 and/or radio interface 82) the PDCCH DCI corresponding to L1 command, the WD 22 can send (e.g., via radio interface 82) a HARQ-ACK in the PUCCH resource given by the PUCCH resource indicator.

The PDCCH DCI (e.g., from network node 16) corresponding to the L1 command can include a HARQ_feedback timing indicator (e.g., 3 bits). In response to detecting or successfully decoding the PDCCH DCI corresponding to L1 command in slot n, the WD 22 can transmit a HARQ-ACK in the PUCCH resource (given by the PUCCH resource indicator) where the slot in which the HARQ-ACK is transmitted is given by the HARQ_feedback timing indicator.

The PDCCH DCI (e.g., from network node 16) corresponding to the L1 command can include additional format bits indicating the format in which the bits corresponding to the Scell(s) are sent. For example, the format bits can indicate whether the bits corresponding to Scells are according to a first option (e.g. option 1) or a second option (e.g. option 2) of the options discussed above.

Higher layers can explicitly indicate (e.g., via higher layer signaling from network node's 16 radio interface 62) the number of bits per SCell within the DCI for L1 command. For example, if the WD 22 is configured with multiple SCells with different number of BWPs per Scell, for simpler DCI formatting, higher layer can configure a fixed 2 bits per SCell regardless of the number of BWPs per Scell. If a WD 22 needs fewer states for an Scell, then additional states can be reserved.

The PDCCH DCI (e.g., from network node 16) corresponding to the L1 command can include zero padding bits to size match the size of the PDCCH DCI to the size of PDCCH for another DCI format (e.g. DCI format 0-0 or 1-0). The PDCCH DCI corresponding to the L1 command can be configured to be monitored in common search space, in WD 22 search space or in both.

The PDCCH DCI corresponding to the L1 command can include a cyclic redundancy check (CRC) (e.g. 24 bits), the CRC can be scrambled by an RNTI (radio network temporary identifier) that is specific to L1 commands. The RNTI can be different from C-RNTI/RA-RNTI/P-RNTI/SI-RNTI/SP-CSI/MCS-C-RNTI (cell-RNTI/random access-RNTI/paging-RNTI/system information-RNTI/semi-persistent-channel state information/modulation and coding scheme-cell-RNTI) configured for the WD 22. The RNTI can be a PDCCH monitoring RNTI or a PM-RNTI or Scell monitoring RNTI or SM-RNTI. The WD 22 may be configured (e.g., by network node 16) with more than one RNTI to receive the PDCCH DCI corresponding L 1 commands. For example, the WD 22 may be configured with a first RNTI which corresponds to PDCCH DCI with the L1 command having bits for a first set of Scells and a second RNTI which corresponds to PDCCH DCI with the L1 command having bits for a second set of Scells. Such a configuration is useful for cases where WD 22 has to receive Scell management bits for a large number of Scells and the size of PDCCH DCI exceeds the size of another DCI format to which it has to be size matched.

Upon reception of PDCCH DCI corresponding to the L1 command, the WD 22 can apply the corresponding actions (e.g. start/stop of PDCCH monitoring, BWP switching), after a time offset t_offset. The time offset can be from the slot in which the L1 command is received by the WD 22. Alternately, the time offset can be from the slot in which the WD 22 transmits HARQ-ACK in response to successful decoding (or detecting) of the PDCCH DCI corresponding to the L1 command.

The time offset can be used indicated to the WD 22 by separate bits in the PDCCH DCI. Alternately, the time offset can be a predefined value or a preconfigured value via higher layers. The possible time offset value(s) can also be indicated by the WD 22 to the network node 16 via WD 22 capability signaling. The time offset can depend on the numerology of the PDCCH and/or the numerology of the HARQ-ACK transmission. If the WD 22 is configured with multiple BWPs for an Scell, the time offset used by the WD 22 can depend on the BWP on which the WD 22 is operating on the Scell when an L1 command corresponding to that Scell is received by the WD 22. For example, when switching from a BWP with no PDCCH monitoring candidates to a BWP with PDCCH monitoring candidates, the WD 22 may apply a first time offset; and when switching from a BWP with PDCCH monitoring candidates to a BWP with no PDCCH monitoring candidates, the WD 22 may apply a second time offset. The second time offset can be smaller than the first time offset.

In some cases, if the L1 command indicates the WD 22 to start PDCCH monitoring on Scellx, the WD 22 can start PDCCH monitoring on that Scell after a small time offset starting from the slot in which the PDCCH DCI is detected or successfully decoded or detected (e.g. after t1=2ms from slot n where L1 command is received). However, if the L1 command indicates the WD 22 to stop PDCCH monitoring on Scellx, the WD 22 can perform this action (e.g., via processing circuitry 84, operational unit 34 and/or radio interface 82) after a time offset starting from the slot in which it transmits a HARQ-ACK in response to detecting the PDCCH DCI with the L1 command (e.g. after t2=2ms from slot n+k1 where L1 command is received in slot n and corresponding HARQ-ACK is sent in slot n+k1).

The PDCCH DCI corresponding to the L1 command can include an offset k_offset (e.g. a certain number of slots). If the WD 22 receives the L1 command in slot n1, the WD 22 applies the second set of actions (e.g., via processing circuitry 84, operational unit 34 and/or radio interface 82) starting from slot n1+k_offset. For example, if the WD 22 receives an L1 command indicating 'off', and k_offset=X for an Scell, the WD 22 stops PDCCH monitoring on the Scell in response to receiving this command. Later, when the WD 22 receives another L1 command indicating 'on' for the Scell on slot n2, the WD 22 is expected to start PDCCH monitoring for the Scell from slot n2+X. Knowing X in advance (i.e., before the L1 'on' command is received) may allow the WD 22 to put its PDCCH decoding hardware in an appropriate sleep state based on X. Larger X value could allow the WD 22 to put its hardware in a state with higher power saving (i.e., by turning off most receiver (rx) components), while a smaller X would allow a state with relatively smaller power savings. However, as a trade-off, a smaller X would allow faster Scell management. In another alternative, k_offset can be configured for the WD 22 via higher layers (i.e., it can be indicated via RRC signalling or MAC CE signalling). The WD 22 may have different k_offset values for different serving cells. In another example, the L1 command can be included (e.g., by network node 16) in a PDCCH DCI scheduling PDSCH/PUSCH for the WD 22 for the corresponding Scell. For example, the bits corresponding 'TPC command for scheduled PUCCH' field in DCI format 1-0 or 1-1, can be used for indicating 'off' L1 command and optionally k_offset.

The PDCCH DCI corresponding to the L1 command can include timer value Tₜᵢₘₑᵣ (e.g., a certain number of slots). If the WD 22 receives the L1 command in slot n1, the WD 22 applies the second set of actions (e.g., via processing circuitry 84, operational unit 34 and/or radio interface 82) starting from slot n1+k_offset and for an amount of time given by the timer value after which the WD 22 stops applying the second set of actions is stopped.

The L1 command can be received by the WD 22 as a wake-up signal or a reference signal (e.g., CSI-RS) with a predefined resource/scrambling pattern. The PDCCH corresponding to the L1 command can be received by the WD 22 on the Pcell/PScell. If the L1 command includes DCI bits corresponding to a set of Scells, the PDCCH corresponding to the L1 command can be received by the WD 22 on a serving cell that is different from the set of Scells.

In some cases, if the WD 22 receives an L1 command and the DCI bits corresponding to Scellx in the L1 command indicating to the WD 22 to switch from a BWP1 to BWP2, and if BWP1 has no PDCCH monitoring candidates and BWP2 has PDCCH monitoring candidates, the WD 22 can stop transmitting/receiving on a set of Scells (e.g., Scells in same frequency band as Scellx) for a short duration (e.g., x=2ms) to retune its radio frequency (RF) to be able to turn on PDCCH reception on BWP2. This duration can occur starting from next slot in which DCI is received or alternate next slot after which a HARQ-ACK corresponding to the L1 command is transmitted by the WD 22. If the DCI bits indicate that the WD 22 is to switch from a BWP2 to BWP1, there may be no need for WD 22 to stop transmitting/receiving on the set of Scells in response to the L1 command. If any radio frequency (RF) retuning is to be performed, the WD 22 can perform this at a later stage (e.g., during discontinuous reception (DRX) or measurement gap).

If the WD 22 is configured to receive a PDCCH DCI format configured for power savings, the DCI bits discussed in options 1, 2, 3, 4 above can be included (e.g., by network node 16) in the PDCCH DCI configured for power savings along with any other bits included for WD 22 power savings.

The PDCCH DCI corresponding to the L1 command can be sent by the network to the WD 22 via a gNB or other network node 16.

One example of DCI content for L1 command is shown below:
- DCI format A_B is used for the transmission of L1 commands for SCell PDCCH monitoring and associated BWP operation.
- The following information is transmitted by means of the DCI format A_B with cyclic redundancy check (CRC) scrambled by SM-RNTI:
   1. - block number 1, block number 2,..., block number *N*
- The parameter *Scell-in-SM-DCI* provided by higher layers determines the index to the block number for the information of an Scell i, with the following fields defined for each block:
   2. - L1 On /off - 0 or 1 bit
      - if the corresponding Scell i is configured with one BWP, L1 On/off indicator is 1 bit, otherwise there is no L1 On/Off indicator in the block
   3. Bandwidth part indicator - 0, 1 or 2 bits as determined by the number of DL BWPs *n*_{BWP,RRC} configured by higher layers for Scell i, excluding the initial downlink (DL) bandwidth part. The bitwidth for this field is determined as $\left⌈{log}_{2}\left({n}_{BWP}\right)\right⌉$ bits, where
      a*. n*_{BWP} *= n*_{BWP,RRC} + 1 if *n*_{BWP,RRC} ≤ 3, in which case the bandwidth part indicator is equivalent to the ascending order of the higher layer parameter *BWP-Id;* and
      b. otherwise *n*_{BWP} = *n*_{BWP,RRC}, in which case the bandwidth part indicator may be defined in a table.

Another example of DCI content for L1 command is shown below where the higher layers configure (e.g., by network node 16 signaling) the number of bits per Scell within the L1 command DCI:
- DCI format A_B is used for the transmission of L1 commands for SCell PDCCH monitoring and associated BWP operation.
- The following information is transmitted by means of the DCI format A_B with CRC scrambled by SM-RNTI:
   1. - block number 1, block number 2,..., block number *N*
The parameter *Scell-in-SM-DCI* provided by higher layers determines the index to the block number for the information of an Scell i, and the parameter *length-of-Block-in-SM-DCI* indicates the number of bits X for each block:
2. - L1 On /off and BWP indicator - X bits
For example, if X = 2,
   - if Scell 1 has one BWP and is associated with block number 1, then in block number 1 if bits are set to 00 => stop PDCCH monitoring, 01=> start PDCCH monitoring, and {10,11} can be reserved.
   - if Scell 2 has two BWP and is associated with block number 2, then in block number 2 if bits are set to 00 => switch to BWPO, 01=> switch to BWP1, and {10,11} can be reserved.
      ∘ In another alternative, then in block number 2 if bits are set to 00 => switch to BWPO and start PDCCH monitoring, 01=> switch to BWP1 and start PDCCH monitoring, and 10 => switch to BWPO and stop PDCCH monitoring, 01=> switch to BWP1 and stop PDCCH monitoring; and
   - if Scell 3 has two BWPs and is associated with block number 3, then in block number 3 if bits are set to 00 => switch to BWPO, 01=> switch to BWP1, and 10=>switch to BWP2 and {11} can be reserved.

In some embodiments, higher layers (e.g., sent by network node 16) can explicitly configure the (BWP index, PDCCH start/stop) pair for each state in each block.

For size matching with 1_0 in common search space, the following may be applied. The number of information bits in format A_B may be equal to or less than the payload size of format 1_0 monitored in common search space in the same serving cell. If the number of information bits in format A_B is less than the payload size of format 1_0 monitored in common search space in the same serving cell, zeros may be appended to format A_B until the payload size equals that of format 1_0 monitored in common search space in the same serving cell.

For size matching with a DCI format X_Y (e.g. 1_0/0_1/1_1, etc.) in WD-specific search space, the following may be applied. The number of information bits in format A_B may be equal to or less than the payload size of format X_Y monitored in WD-specific search space in the same serving cell. If the number of information bits in format A_B is less than the payload size of format X_Ymonitored in WD-specific search space in the same serving cell, zeros may be appended to format A_B until the payload size equals that of format X_Y monitored in WD-specific search space in the same serving cell.

Accordingly, for a WD 22 configured with e.g., CA, dual-connectivity (DC), etc., the WD 22 can advantageously receive an L1 command in PDCCH DCI with bit(s) corresponding to one or more SCell(s). For a first Scell of the one of more SCell(s) which is configured with only one BWP, the WD 22 can use the bit(s) corresponding to the first Scell to turn on/turn off PDCCH monitoring on/for that SCell. For a second Scell of the one of more SCell(s) which is configured with multiple BWPs, the WD 22 can use the bit(s) corresponding to the second Scell to determine a BWP (of the multiple BWPs) to use for operation on the second SCell. The WD 22 may be configured with zero PDCCH candidates on one of the multiple BWPs configured for the second SCell.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Abbreviations that may be used in the preceding description include:

| Abbreviation | Explanation |
|---|---|
| BWP | Bandwidth |
| CDM | Code Division Multiplex |
| CQI | Channel Quality Information |
| CRC | Cyclic Redundancy Check |
| CSI-RS | Channel State Information Reference Signal |
| DC | Dual-connectivity |
| DCI | Downlink Control Information |
| DFT | Discrete Fourier Transform |
| DM-RS | Demodulation Reference Signal |
| EIRP | Effective Isotropic Radiated Power |
| FDM | Frequency Division Multiplex |
| HARQ | Hybrid Automatic Repeat Request |
| OFDM | Orthogonal Frequency Division Multiplex |
| PAPR | Peak to Average Power Ratio |
| PBCH | Primary Broadcast Channel |
| PUCCH | Physical Uplink Control Channel |
| PUSCH | Physical Uplink Shared Channel |
| SRS | Sounding Reference Signal |
| PRACH | Physical Random Access Channel |
| PRB | Physical Resource Block |
| RRC | Radio Resource Control |
| SS-block | Synchronisation Signal Block |
| UCI | Uplink Control Information |

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A method implemented in a wireless device, WD (22), configured to operate on a primary cell and one or more secondary cells, Scells, the method comprising:
operating (S138) on a first bandwidth part, BWP, of a plurality of bandwidth parts, BWPs, the plurality of BWPs being configured for the WD (22) on at least one secondary cell, Scell, of the one or more Scells;
receiving (S140) a command via a physical downlink control channel, PDCCH, signaling on the primary cell; and
responsive to receiving the command via the PDCCH signaling, performing (S142) at least one procedure for the at least one Scell of the one or more Scells, the at least one procedure including operating on one of the first BWP and a second BWP of the plurality of BWPs based on whether a first value or a second value is indicated for the at least one Scell by the command, the method **CHARACTERIZED IN that**: the WD (22) is configured to not monitor PDCCH for one of the first BWP and the second BWP, the BWP for which the WD is configured to not monitor PDCCH being a BWP configured with no PDCCH candidates and the other one of the first BWP and the second BWP being a BWP configured with one or more PDCCH candidates, wherein the WD (22) is configured to not monitor PDCCH when operating on the first BWP, and performing the at least one procedure for the at least one Scell includes continuing to operate on the first BWP when the first value is indicated for the at least one Scell by the command, the method further comprising:
receiving radio resource control, RRC, signaling indicating the BWP configured with no PDCCH candidates.

2. The method of Claim 1, wherein the first value is 0 and the second value is 1.

3. The method of any one of Claims 1-2, further comprising:
receiving a radio resource control, RRC, signaling, the RRC signaling including a BWP index indicating one of the first BWP and the second BWP.

4. The method of any one of Claims 1-3, wherein receiving the command via the PDCCH signaling comprises receiving a physical uplink control channel, PUCCH, resource indicator in a downlink control information, DCI, the PUCCH resource indicator indicating a resource for a Hybrid Automatic Repeat reQuest Acknowledgement, HARQ-ACK, for the command and wherein receiving the command via the PDCCH signaling further comprises receiving a HARQ feedback timing indicator in the DCI, the HARQ feedback timing indicator indicating a slot for the HARQ-ACK for the command.

5. The method of any one of Claims 1-4, wherein the command is included in a physical downlink control channel, PDCCH, downlink control information, DCI, along with a set of bits for power savings when the WD (22) is configured to receive a PDCCH DCI format configured for power savings.

6. The method of any one of Claims 1-5, wherein the WD (22) is configured with N Scells and the command includes N bits, each bit of the N bits corresponding to a respective one of the N Scells.

7. A method implemented in a network node (16) configured to configure a wireless device, WD (22), to operate on a primary cell and one or more secondary cells, Scells, the method comprising:
configuring (S134) the WD (22) to operate on a first bandwidth part, BWP, of a plurality of bandwidth parts, BWPs, the plurality of BWPs being configured for the WD (22) on at least one secondary cell, Scell, of the one or more Scells; and
sending (S136) a command via a physical downlink control channel, PDCCH, signaling on the primary cell, the command indicating at least one procedure to be performed by the WD (22) for the at least one Scell of the one or more Scells, the at least one procedure for the WD (22) including operating on one of the first BWP and a second BWP of the plurality of BWPs based on whether a first value or a second value is indicated for the at least one Scell by the command, the method **CHARACTERIZED IN** comprising:
configuring the WD (22) to not monitor PDCCH for one of the first BWP and the second BWP, wherein the BWP for which the WD is configured to not monitor PDCCH is a BWP configured with no PDCCH candidates and the other one of the first BWP and the second BWP is a BWP configured with one or more PDCCH candidates, wherein the WD (22) is configured to not monitor PDCCH when operating on the first BWP, and the at least one procedure for the at least one Scell includes the WD (22) continuing to operate on the first BWP when the first value is indicated for the at least one Scell by the command, and
sending, to the WD (22), radio resource control, RRC, signaling indicating the BWP configured with no PDCCH candidates.

8. The method of Claim 7, wherein the first value is 0 and the second value is 1.

9. The method of any one of Claims 7-8, further comprising:
sending a radio resource control, RRC, signaling, the RRC signaling including a BWP index indicating one of the first BWP and the second BWP.

10. The method of any one of Claims 7-9, wherein sending the command via the PDCCH signaling comprises sending a physical uplink control channel, PUCCH, resource indicator in a downlink control information, DCI, the PUCCH resource indicator indicating a resource for a Hybrid Automatic Repeat reQuest Acknowledgement, HARQ-ACK, for the command and wherein sending the command via the PDCCH signaling further comprises sending a HARQ feedback timing indicator in the DCI, the HARQ feedback timing indicator indicating a slot for the HARQ-ACK for the command.

11. The method of any one of Claims 7-10, wherein the command is included in a physical downlink control channel, PDCCH, downlink control information, DCI, along with a set of bits for power savings when the WD (22) is configured to receive a PDCCH DCI format configured for power savings.

12. The method of any one of Claims 7-11, wherein the WD (22) is configured with N Scells and the command includes N bits, each bit of the N bits corresponding to a respective one of the N Scells.

13. A wireless device, WD (22), configured to operate on a primary cell and one or more secondary cells, Scells, the WD (22) comprising processing circuitry (84), the processing circuitry (84) configured to cause the WD (22) to:
operate on a first bandwidth part, BWP, of a plurality of bandwidth parts, BWPs, the plurality of BWPs being configured for the WD (22) on at least one secondary cell, Scell, of the one or more Scells;
receive a command via a physical downlink control channel, PDCCH, signaling on the primary cell; and
responsive to receiving the command via the PDCCH signaling, perform at least one procedure for the at least one Scell of the one or more Scells, the at least one procedure including operating on one of the first BWP and a second BWP of the plurality of BWPs based on whether a first value or a second value is indicated for the at least one Scell by the command, the WD (22) **CHARACTERIZED IN that**:
the WD (22) is configured to not monitor PDCCH for one of the first BWP and the second BWP, the BWP for which the WD is configured to not monitor PDCCH being a BWP configured with no PDCCH candidates and the other one of the first BWP and the second BWP being a BWP configured with one or more PDCCH candidates, wherein the WD (22) is configured to not monitor PDCCH when operating on the first BWP, and the at least one procedure for the at least one Scell includes the WD (22) continuing to operate on the first BWP when the first value is indicated for the at least one Scell by the command,
the processing circuitry (84) further configured to cause the WD (22) to:
receive radio resource control, RRC, signaling indicating the BWP configured with no PDCCH candidates.

14. A network node (16) configured to configure a wireless device, WD (22), to operate on a primary cell and one or more secondary cells, Scells, the network node (16) comprising processing circuitry (68), the processing circuitry (68) configured to cause the network node (16) to:
configure the WD (22) to operate on a first bandwidth part, BWP, of a plurality of bandwidth parts, BWPs, the plurality of BWPs being configured for the WD (22) on at least one secondary cell, Scell, of the one or more Scells; and
send a command via a physical downlink control channel, PDCCH, signaling on the primary cell, the command indicating at least one procedure to be performed by the WD (22) for the at least one Scell of the one or more Scells, the at least one procedure for the WD (22) including operating on one of the first BWP and a second BWP of the plurality of BWPs based on whether a first value or a second value is indicated for the at least one Scell by the command, the network node (16) **CHARACTERIZED IN** the processing circuitry (68) further configured to cause the network node (16) to:
configure the WD (22) to not monitor PDCCH for one of the first BWP and the second BWP, wherein the BWP for which the WD is configured to not monitor PDCCH is a BWP configured with no PDCCH candidates and the other one of the first BWP and the second BWP is a BWP configured with one or more PDCCH candidates, wherein the WD (22) is configured to not monitor PDCCH when operating on the first BWP, and the at least one procedure for the at least one Scell includes the WD (22) continuing to operate on the first BWP when the first value is indicated for the at least one Scell by the command, and
send, to the WD (22), radio resource control, RRC, signaling indicating the BWP configured with no PDCCH candidates.

## Patentansprüche

1. Verfahren, das in einer drahtlosen Vorrichtung, WD, (22), implementiert wird, die dazu konfiguriert ist, in einer Primärzelle und einer oder mehreren Sekundärzellen, Scells, zu operieren, wobei das Verfahren Folgendes umfasst:
Operieren (S138) auf einem ersten Bandbreitenteil, BWP, einer Mehrzahl von Bandbreitenteilen, BWPs, wobei die Mehrzahl von BWPs für die WD (22) in mindestens einer Sekundärzelle, Scell, der einen oder der mehreren Scells konfiguriert ist;
Empfangen (S140) eines Befehls über eine Physical-Downlink-Control-Channel-Signalisierung, PDCCH-Signalisierung, in der Primärzelle; und
in Reaktion auf das Empfangen des Befehls über die PDCCH-Signalisierung Durchführen (S142) mindestens einer Prozedur für die mindestens eine Scell der einen oder der mehreren Scells, wobei die mindestens eine Prozedur Operieren auf einem von dem ersten BWP und einem zweiten BWP der Mehrzahl von BWPs basierend darauf umfasst, ob ein erster Wert oder ein zweiter Wert für die mindestens eine Scell durch den Befehl angezeigt wird, wobei das Verfahren **dadurch gekennzeichnet ist, dass**:
die WD (22) dazu konfiguriert ist, den PDCCH für einen von dem ersten BWP und dem zweiten BWP nicht zu überwachen, wobei der BWP, für den die WD dazu konfiguriert ist, den PDCCH nicht zu überwachen, ein BWP ist, der ohne PDCCH-Kandidaten konfiguriert ist, und der andere von dem ersten BWP und dem zweiten BWP ein BWP ist, der mit einem oder mehreren PDCCH-Kandidaten konfiguriert ist, wobei die WD (22) dazu konfiguriert ist, den PDCCH nicht zu überwachen, wenn sie auf dem ersten BWP operiert, und das Durchführen der mindestens einen Prozedur für die mindestens eine Scell umfasst, fortzufahren, auf dem ersten BWP zu operieren, wenn der erste Wert für die mindestens eine Scell durch den Befehl angezeigt wird, wobei das Verfahren ferner Folgendes umfasst:
Empfangen von Funkressourcensteuerungssignalisierung, RRC-Signalisierung, die den BWP anzeigt, der ohne PDCCH-Kandidaten konfiguriert ist.

2. Verfahren nach Anspruch 1, wobei der erste Wert 0 ist und der zweite Wert 1 ist.

3. Verfahren nach einem der Ansprüche 1-2, ferner umfassend:
Empfangen einer Funkressourcensteuerungssignalisierung, RRC-Signalisierung, wobei die RRC-Signalisierung einen BWP-Index umfasst, der einen von dem ersten BWP und dem zweiten BWP anzeigt.

4. Verfahren nach einem der Ansprüche 1-3, wobei das Empfangen des Befehls über die PDCCH-Signalisierung Empfangen eines Physical-Uplink-Control-Channel-Ressourcenindikators, PUCCH-Ressourcenindikators, in Downlink-Steuerinformationen, DCI, umfasst, wobei der PUCCH-Ressourcenindikator eine Ressource für eine Hybrid Automatic Repeat reQuest Acknowledgement, HARQ-ACK, für den Befehl anzeigt und wobei das Empfangen des Befehls über PDCCH-Signalisierung ferner Empfangen eines HARQ-Rückmeldungszeitindikators in den DCI umfasst, wobei der HARQ-Rückmeldungszeitindikator einen Schlitz für die HARQ-ACK für den Befehl anzeigt.

5. Verfahren nach einem der Ansprüche 1-4, wobei der Befehl in Physical-Downlink-Control-Channel-Downlink-Steuerinformationen, PDCCH-DCI, zusammen mit einem Satz von Bits für Leistungseinsparungen aufgenommen wird, wenn die WD (22) dazu konfiguriert ist, ein PDCCH-DCI-Format zu empfangen, das für Leistungseinsparungen konfiguriert ist.

6. Verfahren nach einem der Ansprüche 1-5, wobei die WD (22) mit N Scells konfiguriert ist und der Befehl N Bits umfasst, wobei jedes Bit der N Bits einer jeweiligen der N Scells entspricht.

7. Verfahren, das in einem Netzwerkknoten (16) implementiert wird, der dazu konfiguriert ist, eine drahtlose Vorrichtung, WD, (22) zu konfigurieren, um in einer Primärzelle und einer oder mehreren Sekundärzellen, Scells, zu operieren, wobei das Verfahren Folgendes umfasst:
Konfigurieren (S134) der WD (22), um auf einem ersten Bandbreitenteil, BWP, einer Mehrzahl von Bandbreitenteilen, BWPs, zu operieren, wobei die Mehrzahl von BWPs für die WD (22) in mindestens einer Sekundärzelle, Scell, der einen oder der mehreren Scells konfiguriert ist; und
Senden (S136) eines Befehls über eine Physical-Downlink-Control-Channel-Signalisierung, PDCCH-Signalisierung, in der Primärzelle, wobei der Befehl mindestens eine Prozedur anzeigt, die von der WD (22) für die mindestens eine Scell der einen oder der mehreren Scells durchgeführt werden soll, wobei die mindestens eine Prozedur für die WD (22) Operieren auf einem von dem ersten BWP und einem zweiten BWP der Mehrzahl von BWPs basierend darauf umfasst, ob ein erster Wert oder ein zweiter Wert für die mindestens eine Scell durch den Befehl angezeigt wird, wobei das Verfahren **dadurch gekennzeichnet ist, dass** es Folgendes umfasst:
Konfigurieren der WD (22), um den PDCCH für einen von dem ersten BWP und dem zweiten BWP nicht zu überwachen, wobei der BWP, für den die WD konfiguriert ist, den PDCCH nicht zu überwachen, ein BWP ist, der ohne PDCCH-Kandidaten konfiguriert ist, und der andere von dem ersten BWP und dem zweien BWP ein BWP ist, der mit einem oder mehreren PDCCH-Kandidaten konfiguriert ist, wobei die WD (22) dazu konfiguriert ist, den PDCCH nicht zu überwachen, wenn sie auf dem ersten BWP operiert, und die mindestens eine Prozedur für die mindestens eine Scell umfasst, dass die WD (22) fortfährt, auf dem ersten BWP zu operieren, wenn der erste Wert durch den Befehl für die mindestens eine Scell angezeigt wird, und
Senden von Funkressourcensteuerungssignalisierung, RRC-Signalisierung, die den BWP anzeigt, der ohne PDCCH-Kandidaten konfiguriert ist, an die WD (22).

8. Verfahren nach Anspruch 7, wobei der erste Wert 0 ist und der zweite Wert 1 ist.

9. Verfahren nach einem der Ansprüche 7-8, ferner umfassend:
Senden einer Funkressourcensteuerungssignalisierung, RRC-Signalisierung, wobei die RRC-Signalisierung einen BWP-Index umfasst, der einen von dem ersten BWP und dem zweiten BWP anzeigt.

10. Verfahren nach einem der Ansprüche 7-9, wobei das Senden des Befehls über die PDCCH-Signalisierung Senden eines Physical-Uplink-Control-Channel-Ressourcenindikators, PUCCH-Ressourcenindikators, in Downlink-Steuerinformationen, DCI, umfasst, wobei der PUCCH-Ressourcenindikator eine Ressource für eine Hybrid Automatic Repeat reQuest Acknowledgement, HARQ-ACK, für den Befehl anzeigt und wobei das Senden des Befehls über PDCCH-Signalisierung ferner Senden eines HARQ-Rückmeldungszeitindikators in den DCI umfasst, wobei der HARQ-Rückmeldungszeitindikator einen Schlitz für die HARQ-ACK für den Befehl anzeigt.

11. Verfahren nach einem der Ansprüche 7-10, wobei der Befehl in Physical-Downlink-Control-Channel-Downlink-Steuerinformationen, PDCCH-DCI, zusammen mit einem Satz von Bits für Leistungseinsparungen aufgenommen wird, wenn die WD (22) dazu konfiguriert ist, ein PDCCH-DCI-Format zu empfangen, das für Leistungseinsparungen konfiguriert ist.

12. Verfahren nach einem der Ansprüche 7-11, wobei die WD (22) mit N Scells konfiguriert ist und der Befehl N Bits umfasst, wobei jedes Bit der N Bits einer jeweiligen der N Scells entspricht.

13. Drahtlose Vorrichtung, WD, (22), die dazu konfiguriert ist, in einer Primärzelle und einer oder mehreren Sekundärzellen, Scells, zu operieren, wobei die WD (22) Verarbeitungsschaltungsanordnung (84) umfasst, wobei die Verarbeitungsschaltungsanordnung (84) dazu konfiguriert ist, die WD (22) zu Folgendem zu veranlassen:
Operieren auf einem ersten Bandbreitenteil, BWP, einer Mehrzahl von Bandbreitenteilen, BWPs, wobei die Mehrzahl von BWPs für die WD (22) in mindestens einer Sekundärzelle, Scell, der einen oder der mehreren Scells konfiguriert ist;
Empfangen eines Befehls über eine Physical-Downlink-Control-Channel-Signalisierung, PDCCH-Signalisierung, in der Primärzelle; und
in Reaktion auf das Empfangen des Befehls über die PDCCH-Signalisierung Durchführen mindestens einer Prozedur für die mindestens eine Scell der einen oder der mehreren Scells, wobei die mindestens eine Prozedur Operieren auf einem von dem ersten BWP und einem zweiten BWP der Mehrzahl von BWPs basierend darauf umfasst, ob ein erster Wert oder ein zweiter Wert für die mindestens eine Scell durch den Befehl angezeigt wird, wobei WD (22) **dadurch gekennzeichnet ist, dass**:
die WD (22) dazu konfiguriert ist, den PDCCH für einen von dem ersten BWP und dem zweiten BWP nicht zu überwachen, wobei der BWP, für den die WD konfiguriert ist, den PDCCH nicht zu überwachen, ein BWP ist, der ohne PDCCH-Kandidaten konfiguriert ist, und der andere von dem ersten BWP und dem zweien BWP ein BWP ist, der mit einem oder mehreren PDCCH-Kandidaten konfiguriert ist, wobei die WD (22) dazu konfiguriert ist, den PDCCH nicht zu überwachen, wenn sie auf dem ersten BWP operiert, und die mindestens eine Prozedur für die mindestens eine Scell umfasst, dass die WD (22) fortfährt, auf dem ersten BWP zu operieren, wenn der erste Wert durch den Befehl für die mindestens eine Scell angezeigt wird,
die Verarbeitungsschaltungsanordnung (84) ferner dazu konfiguriert ist, die WD (22) zu Folgendem zu veranlassen:
Empfangen von Funkressourcensteuerungssignalisierung, RRC-Signalisierung, die den BWP anzeigt, der ohne PDCCH-Kandidaten konfiguriert ist.

14. Netzwerkknoten (16), der dazu konfiguriert ist, eine drahtlose Vorrichtung, WD, (22) zu konfigurieren, um in einer Primärzelle und einer oder mehreren Sekundärzellen, Scells, zu operieren, wobei der Netzwerkknoten (16) Verarbeitungsschaltungsanordnung (68) umfasst, wobei die Verarbeitungsschaltungsanordnung (68) dazu konfiguriert ist, den Netzwerkknoten (16) zu Folgendem zu veranlassen:
Konfigurieren der WD (22), um auf einem ersten Bandbreitenteil, BWP, einer Mehrzahl von Bandbreitenteilen, BWPs, zu operieren, wobei die Mehrzahl von BWPs für die WD (22) in mindestens einer Sekundärzelle, Scell, der einen oder der mehreren Scells konfiguriert ist; und
Senden eines Befehls über eine Physical-Downlink-Control-Channel-Signalisierung, PDCCH-Signalisierung, in der Primärzelle, wobei der Befehl mindestens eine Prozedur anzeigt, die von der WD (22) für die mindestens eine Scell der einen oder der mehreren Scells durchgeführt werden soll, wobei die mindestens eine Prozedur für die WD (22) Operieren auf einem von dem ersten BWP und einem zweiten BWP der Mehrzahl von BWPs basierend darauf umfasst, ob ein erster Wert oder ein zweiter Wert für die mindestens eine Scell durch den Befehl angezeigt wird, wobei der Netzwerkknoten (16) **dadurch gekennzeichnet ist, dass** die Verarbeitungsschaltungsanordnung (68) ferner dazu konfiguriert ist, den Netzwerkknoten (16) zu Folgendem zu veranlassen:
Konfigurieren der WD (22), um den PDCCH für einen von dem ersten BWP und dem zweiten BWP nicht zu überwachen, wobei der BWP, für den die WD konfiguriert ist, den PDCCH nicht zu überwachen, ein BWP ist, der ohne PDCCH-Kandidaten konfiguriert ist, und der andere von dem ersten BWP und dem zweien BWP ein BWP ist, der mit einem oder mehreren PDCCH-Kandidaten konfiguriert ist, wobei die WD (22) dazu konfiguriert ist, den PDCCH nicht zu überwachen, wenn sie auf dem ersten BWP operiert, und die mindestens eine Prozedur für die mindestens eine Scell umfasst, dass die WD (22) fortfährt, auf dem ersten BWP zu operieren, wenn der erste Wert durch den Befehl für die mindestens eine Scell angezeigt wird, und
Senden von Funkressourcensteuerungssignalisierung, RRC-Signalisierung, die den BWP anzeigt, der ohne PDCCH-Kandidaten konfiguriert ist, an die WD (22).

## Revendications

1. Procédé mis en œuvre dans un dispositif sans fil, WD (22), configuré pour fonctionner sur une cellule primaire et une ou plusieurs cellules secondaires, Scell, le procédé comprenant :
le fonctionnement (S138) sur une première partie de bande passante, BWP, parmi une pluralité de parties de bande passante, BWP, la pluralité de BWP étant configurées pour le WD (22) sur au moins une cellule secondaire, Scell, parmi les une ou plusieurs Scell ;
la réception (S140) d'une commande via une signalisation de canal de commande de liaison descendante physique, PDCCH, sur la cellule primaire ; et
en réponse à la réception de la commande via la signalisation PDCCH, la réalisation (S142) d'au moins une procédure pour l'au moins une Scell parmi les une ou plusieurs Scell, l'au moins une procédure incluant le fonctionnement sur l'une parmi la première BWP et une deuxième BWP parmi la pluralité de BWP selon qu'une première valeur ou une deuxième valeur est indiquée pour l'au moins une Scell par la commande, le procédé étant **caractérisé en ce que** :
le WD (22) est configuré pour ne pas surveiller de PDCCH pour l'une parmi la première BWP et la deuxième BWP, la BWP pour laquelle le WD est configuré pour ne pas surveiller de PDCCH étant une BWP configurée sans aucun candidat PDCCH et l'autre parmi la première BWP et la deuxième BWP étant une BWP configurée avec un ou plusieurs candidats PDCCH, dans lequel le WD (22) est configuré pour ne pas surveiller de PDCCH lors du fonctionnement sur la première BWP, et la réalisation de l'au moins une procédure pour l'au moins une Scell inclut la continuation du fonctionnement sur la première BWP lorsque la première valeur est indiquée pour l'au moins une Scell par la commande, le procédé comprenant en outre :
la réception d'une signalisation de commande de ressources radio, RRC, indiquant la BWP configurée avec aucun candidat PDCCH.

2. Procédé selon la revendication 1, dans lequel la première valeur est 0 et la deuxième valeur est 1.

3. Procédé selon l'une quelconque des revendications 1 et 2, comprenant en outre :
la réception d'une signalisation de commande de ressources radio, RRC, la signalisation RRC incluant un indice de BWP indiquant l'une parmi la première BWP et la deuxième BWP.

4. Procédé selon l'une quelconque des revendications 1 à 3, dans lequel la réception de la commande via la signalisation PDCCH comprend la réception d'un indicateur de ressource de canal de commande de liaison montante physique, PUCCH, dans une information de commande de liaison descendante, DCI, l'indicateur de ressource PUCCH indiquant une ressource pour un accusé de réception de demande de répétition automatique hybride, HARQ-ACK, pour la commande et dans lequel la réception de la commande via la signalisation PDCCH comprend en outre la réception d'un indicateur de temporisation de retour HARQ dans la DCI, l'indicateur de temporisation de retour HARQ indiquant un créneau pour le HARQ-ACK pour la commande.

5. Procédé selon l'une quelconque des revendications 1 à 4, dans lequel la commande est incluse dans une information de commande de liaison descendante, DCI, de canal de commande de liaison descendante physique, PDCCH, avec un ensemble de bits pour des économies d'énergie lorsque le WD (22) est configuré pour recevoir un format de DCI de PDCCH configuré pour des économies d'énergie.

6. Procédé selon l'une quelconque des revendications 1 à 5, dans lequel le WD (22) est configuré avec N Scell et la commande inclut N bits, chaque bit parmi les N bits correspondant à l'une respective des N Scell.

7. Procédé mis en œuvre dans un nœud de réseau (16) configuré pour configurer un dispositif sans fil, WD (22), pour fonctionner sur une cellule primaire et une ou plusieurs cellules secondaires, Scell, le procédé comprenant :
la configuration (S134) du WD (22) pour fonctionner sur une première partie de bande passante, BWP, parmi une pluralité de parties de bande passante, BWP, la pluralité de BWP étant configurées pour le WD (22) sur au moins une cellule secondaire, Scell, parmi les une ou plusieurs Scell ; et
l'envoi (S136) d'une commande via une signalisation de canal de commande de liaison descendante physique, PDCCH, sur la cellule primaire, la commande indiquant au moins une procédure à réaliser par le WD (22) pour l'au moins une Scell parmi les une ou plusieurs Scell, l'au moins une procédure pour le WD (22) incluant le fonctionnement sur l'une parmi la première BWP et une deuxième BWP parmi la pluralité de BWP selon qu'une première valeur ou une deuxième valeur est indiquée pour l'au moins une Scell par la commande, le procédé étant **caractérisé en ce qu'**il comprend :
la configuration du WD (22) pour ne pas surveiller de PDCCH pour l'une parmi la première BWP et la deuxième BWP, dans lequel la BWP pour laquelle le WD est configuré pour ne pas surveiller de PDCCH est une BWP configurée sans aucun candidat PDCCH et l'autre parmi la première BWP et la deuxième BWP est une BWP configurée avec un ou plusieurs candidats PDCCH, dans lequel le WD (22) est configuré pour ne pas surveiller de PDCCH lors du fonctionnement sur la première BWP, et l'au moins une procédure pour l'au moins une Scell inclut la continuation du fonctionnement du WD (22) sur la première BWP lorsque la première valeur est indiquée pour l'au moins une Scell par la commande, et
l'envoi, au WD (22), d'une signalisation de commande de ressources radio, RRC, indiquant la BWP configurée avec aucun candidat PDCCH.

8. Procédé selon la revendication 7, dans lequel la première valeur est 0 et la deuxième valeur est 1.

9. Procédé selon l'une quelconque des revendications 7 et 8, comprenant en outre :
l'envoi d'une signalisation de commande de ressources radio, RRC, la signalisation RRC incluant un indice de BWP indiquant l'une parmi la première BWP et la deuxième BWP.

10. Procédé selon l'une quelconque des revendications 7 à 9, dans lequel l'envoi de la commande via la signalisation PDCCH comprend l'envoi d'un indicateur de ressource de canal de commande de liaison montante physique, PUCCH, dans une information de commande de liaison descendante, DCI, l'indicateur de ressource PUCCH indiquant une ressource pour un accusé de réception de demande de répétition automatique hybride, HARQ-ACK, pour la commande et dans lequel l'envoi de la commande via la signalisation PDCCH comprend en outre l'envoi d'un indicateur de temporisation de retour HARQ dans la DCI, l'indicateur de temporisation de retour HARQ indiquant un créneau pour le HARQ-ACK pour la commande.

11. Procédé selon l'une quelconque des revendications 7 à 10, dans lequel la commande est incluse dans une information de commande de liaison descendante, DCI, de canal de commande de liaison descendante physique, PDCCH, avec un ensemble de bits pour des économies d'énergie lorsque le WD (22) est configuré pour recevoir un format de DCI de PDCCH configuré pour des économies d'énergie.

12. Procédé selon l'une quelconque des revendications 7 à 11, dans lequel le WD (22) est configuré avec N Scell et la commande inclut N bits, chaque bit parmi les N bits correspondant à l'une respective des N Scell.

13. Dispositif sans fil, WD (22), configuré pour fonctionner sur une cellule primaire et une ou plusieurs cellules secondaires, Scell, le WD (22) comprenant une circuiterie de traitement (84), la circuiterie de traitement (84) étant configurée pour amener le WD (22) à :
fonctionner sur une première partie de bande passante, BWP, parmi une pluralité de parties de bande passante, BWP, la pluralité de BWP étant configurées pour le WD (22) sur au moins une cellule secondaire, Scell, parmi les une ou plusieurs Scell ;
recevoir une commande via une signalisation de canal de commande de liaison descendante physique, PDCCH, sur la cellule primaire ; et
en réponse à la réception de la commande via la signalisation PDCCH, réaliser au moins une procédure pour l'au moins une Scell parmi les une ou plusieurs Scell, l'au moins une procédure incluant le fonctionnement sur l'une parmi la première BWP et une deuxième BWP parmi la pluralité de BWP selon qu'une première valeur ou une deuxième valeur est indiquée pour l'au moins une Scell par la commande, le WD (22) étant **caractérisé en ce que** :
le WD (22) est configuré pour ne pas surveiller de PDCCH pour l'une parmi la première BWP et la deuxième BWP, la BWP pour laquelle le WD est configuré pour ne pas surveiller de PDCCH étant une BWP configurée sans aucun candidat PDCCH et l'autre parmi la première BWP et la deuxième BWP étant une BWP configurée avec un ou plusieurs candidats PDCCH, dans lequel le WD (22) est configuré pour ne pas surveiller de PDCCH lors du fonctionnement sur la première BWP, et l'au moins une procédure pour l'au moins une Scell inclut la continuation du fonctionnement du WD (22) sur la première BWP lorsque la première valeur est indiquée pour l'au moins une Scell par la commande,
la circuiterie de traitement (84) étant en outre configurée pour amener le WD (22) à :
recevoir une signalisation de commande de ressources radio, RRC, indiquant la BWP configurée avec aucun candidat PDCCH.

14. Nœud de réseau (16) configuré pour configurer un dispositif sans fil, WD (22), pour fonctionner sur une cellule primaire et une ou plusieurs cellules secondaires, Scell, le nœud de réseau (16) comprenant une circuiterie de traitement (68), la circuiterie de traitement (68) étant configurée pour amener le nœud de réseau (16) à :
configurer le WD (22) pour fonctionner sur une première partie de bande passante, BWP, parmi une pluralité de parties de bande passante, BWP, la pluralité de BWP étant configurées pour le WD (22) sur au moins une cellule secondaire, Scell, parmi les une ou plusieurs Scell ; et
envoyer une commande via une signalisation de canal de commande de liaison descendante physique, PDCCH, sur la cellule primaire, la commande indiquant au moins une procédure à réaliser par le WD (22) pour l'au moins une Scell parmi les une ou plusieurs Scell, l'au moins une procédure pour le WD (22) incluant le fonctionnement sur l'une parmi la première BWP et une deuxième BWP parmi la pluralité de BWP selon qu'une première valeur ou une deuxième valeur est indiquée pour l'au moins une Scell par la commande, le nœud de réseau (16) étant **caractérisé en ce que** la circuiterie de traitement (68) est en outre configurée pour amener le nœud de réseau (16) à :
configurer le WD (22) pour ne pas surveiller de PDCCH pour l'une parmi la première BWP et la deuxième BWP, dans lequel la BWP pour laquelle le WD est configuré pour ne pas surveiller de PDCCH est une BWP configurée sans aucun candidat PDCCH et l'autre parmi la première BWP et la deuxième BWP est une BWP configurée avec un ou plusieurs candidats PDCCH, dans lequel le WD (22) est configuré pour ne pas surveiller de PDCCH lors du fonctionnement sur la première BWP, et l'au moins une procédure pour l'au moins une Scell inclut la continuation du fonctionnement du WD (22) sur la première BWP lorsque la première valeur est indiquée pour l'au moins une Scell par la commande, et
envoyer, au WD (22), une signalisation de commande de ressources radio, RRC, indiquant la BWP configurée avec aucun candidat PDCCH.
